# EUROPEAN PATENT APPLICATION

(11) **EP 4 434 653 A1**
(43) Date of publication of application: **25.09.2024**
(21) Application number: 24162577.1
(22) Date of filing: 11.03.2024
(51) Int. Cl.: B22F 1/052, B22F 3/10, B22F 10/14, B33Y 10/00, B33Y 70/00, C22C 1/04

(54) **ALUMINUM POWDER MIXTURE, METAL ADDITIVE MANUFACTURING POWDER, AND ADDITIVELY MANUFACTURED METAL PRODUCT**

(30) Priority: 22.03.2023 JP 2023045849
(71) Applicant: Ricoh Company, Ltd., Tokyo 143-8555 (JP); Nikkeikin Aluminium Core Technology Company, Ltd., Tokyo 105-8681 (JP); Toyo Aluminium Kabushiki Kaisha, Osaka-shi, Osaka 541-0056 (JP)
(72) Inventor: OYA, Naoki, Tokyo 143-8555 (JP); YATSUKURA, Masato, Tokyo 105-8681 (JP); MURAKAMI, Isao, Osaka 541-0056 (JP)
(74) Representative: SSM Sandmair

(57) **Abstract**

A material for additive manufacturing includes a powder A and a powder B. The powder A includes an alloy or a pure metal. The powder B includes an alloy having a composition different from a composition of the powder A. The material for additive manufacturing has a temperature range in which a liquid phase ratio of the powder A is 30% by mass or less relative to a total mass of the powder A, and a liquid phase ratio of the powder B is 70% by mass or greater relative to a total mass of the powder B.

## Description

### BACKGROUND OF THE INVENTION

### 1. Field of the Invention

The disclosures herein generally relate to a material for additive manufacturing, an additive manufacturing method, and an additive manufacturing apparatus.

### 2. Description of the Related Art

In recent years, additive manufacturing has been attracted attention. The additive manufacturing is a technology that produces highly precise three-dimensional objects formed of a metal or ceramic. The metal additive manufacturing includes powder bed fusion, selective laser melting, binder jetting (BJT), etc. The powder bed fusion is a method where a metal powder bed uniformly spread over a stage is irradiated with laser or electron beams to selectively partially melt and solidify the metal powder. The selective laser melting is a method in which a metal powder is directly supplied to an area irradiated with laser or electron beams. The binder jetting (BJT) is a method where a hardening liquid is ejected to a powder layer by ink jetting to solidify the powder layer to produce an object, which is referred to as a sintering precursor, and the sintering precursor is subjected to a heat treatment to evaporate a resin component (referred to as "removal of the resin" or "degreasing"), followed by further heating the sintering precursor to bind the particles of the powder together to produce a sintered compact, which is a final product (referred to as "sintering").

The metal additive manufacturing is a new production technology, and further developments of the metal additive manufacturing are desired. Particularly, aluminum (Al) is suitable for additive manufacturing because the aluminum (Al) has a low melting point compared to iron, etc., and uses less energy for production. However, use of the aluminum (Al) in the metal additive manufacturing has problems. For example, as the metal powder is partially melted and solidified to form an object, defects, such as voids or solidification failures, may be caused during the solidification.

In order to minimize defects, such as voids and solidification failures, for example, the following method has been proposed. A metal powder serving as a base material and a metal powder having the higher melting point than a melting point of the base metal powder are mixed, and the mixed powder is solidified using the metal powder having the higher melting point as nuclei to suppress defects of an object formed (see, for example, Japanese Unexamined Patent Application Publication No. 2019-85604).

### SUMMARY OF THE INVENTION

In one embodiment, a material for additive manufacturing includes a powder A and a powder B. The powder A includes an alloy or a pure metal. The powder B includes an alloy having a composition different from a composition of the powder A. The material for additive manufacturing has a temperature range in which a liquid phase ratio of the powder A is 30% by mass or less relative to a total mass of the powder A, and a liquid phase ratio of the powder B is 70% by mass or greater relative to a total mass of the powder B.

### BRIEF DESCRIPTION OF THE DRAWINGS

Fig. 1 is a schematic cross-sectional view illustrating an example of a BJT additive manufacturing apparatus of the present disclosure;
Fig. 2 is a schematic side view of the additive manufacturing apparatus of Fig. 1;
Fig. 3 is a schematic cross-sectional view illustrating a modeling section of the additive manufacturing apparatus of Fig. 1;
Fig. 4 is a schematic perspective view of the additive manufacturing apparatus of Fig. 1;
Fig. 5A is a schematic perspective view illustrating a powder tank of the additive manufacturing apparatus of Fig. 1;
Fig. 5B is a schematic perspective view illustrating a supply tank and modeling tank of the additive manufacturing apparatus of Fig. 1;
Fig. 6 is a block diagram illustrating an example of a controller of the BJT additive manufacturing apparatus of the present disclosure;
Fig. 7A is a schematic cross-sectional view illustrating an example of a modeling process in the modeling section of the BJT additive manufacturing apparatus of the present disclosure;
Fig. 7B is a schematic cross-sectional view illustrating an example of the flow of the modeling process in the modeling section of the BJT additive manufacturing apparatus of the present disclosure;
Fig. 7C is a schematic cross-sectional view illustrating an example of the flow of the modeling process in the modeling section of the BJT additive manufacturing apparatus of the present disclosure;
Fig. 7D is a schematic cross-sectional view illustrating an example of the flow of the modeling process in the modeling section of the BJT additive manufacturing apparatus of the present disclosure;
Fig. 7E is a schematic cross-sectional view illustrating an example of the flow of the modeling process in the modeling section of the BJT additive manufacturing apparatus of the present disclosure;
Fig. 8 is a graph depicting one example of a relationship between the progress of the resin removal and sintering in the BJT additive manufacturing method of the present disclosure, and the temperature of the material for additive manufacturing of the present disclosure, where the vertical axis represents a temperature (°C) of the material for additive manufacturing and the horizontal axis represents a time (h);
Fig. 9A is a graph depicting a result of shifts of the liquid phase ratios of the powder A (pure Al) and the powder B (AlSi12) of Example 1 relative to a temperature, which are calculated by thermodynamic calculation software (CaTCalc), where the vertical axis represents a liquid phase ratio (%) and the horizontal axis represents a temperature (°C);
Fig. 9B is a graph depicting a result of shifts of the liquid phase ratios of the powder A (AlSi4) and the powder B (AlSi5) of Comparative Example 2 relative to a temperature, which are calculated by thermodynamic calculation software (CaTCalc), where the vertical axis represents a liquid phase ratio (%) and the horizontal axis represents a temperature (°C);
Fig. 10A is a schematic perspective view illustrating the shape of each of the sintering precursors produced in Examples 1 to 14 and Comparative Examples 1 to 2;
Fig. 10B is a schematic front view illustrating the shape of each of the sintering precursors produced in Examples 1 to 14 and Comparative Examples 1 to 2; and
Fig. 10C is a schematic front view illustrating the shape of each of the sintered compacts of Examples 1 to 14 and Comparative Examples 1 to 2, and is an explanatory view for an evaluation method of a deformation amount of the sintered compact.

### DESCRIPTION OF THE PREFERRED EMBODIMENTS

In the following, embodiments of the present invention will be described with reference to the accompanying drawings.

Further, the present invention is not limited to these embodiments, but various variations and modifications may be made without departing from the scope of the present invention. Various variations and modifications of the embodiments are also included within the scope of the present invention, as long as functions and effects of the present invention are exhibited.

### (Material for additive manufacturing)

The material for additive manufacturing includes a powder A and a powder B. The powder A includes an alloy or a pure metal. The powder B includes an alloy having a composition different from a composition of the powder A. The material for additive manufacturing has a temperature range in which a liquid phase ratio of the powder A is 30% by mass or less relative to a total mass of the powder A, and a liquid phase ratio of the powder B is 70% by mass or greater relative to a total mass of the powder B.

At the time of sintering of a sintering precursor in additive manufacturing, if an amount of a melted metal is too large, the shape of a sintered compact cannot be retained, and if an amount of a melted metal is too small, a liquid phase is not sufficiently spread through the space between metal particles of a solid phase, and binding failures may occur, causing defects, such as voids. Especially when aluminum (Al) is used in additive manufacturing, an oxide film present at a surface of a particle may not be sufficiently broken so that sintering failures may occur. Therefore, highly precise control of a sintering temperature is desired.

An object of the present disclosure is to provide a material for additive manufacturing, with which additive manufacturing is easily performed and an object having excellent shape retention can be produced.

A metal can shift a melting point, as one or more other elements are added to the metal, even if a metal used as a base material is the same. Specifically, a melting point of the metal can be varied by one or more elements added and the amount of the one or more elements. The present inventors have found the following insights. A metal powder having a high melting point obtained by changing a type or amount of one or more elements added, and a metal powder having a low melting point obtained by changing a type or amount of one or more elements added are mixed. As a result, only the metal powder having the low melting point is melted during sintering. Therefore, the sintering can be performed without highly precise temperature control, while minimizing sintering failures. When the mixed powder is heated at the same temperature, a liquid phase ratio of the metal having the high melting point is low, and a liquid phase ratio of the metal having the low melting point is high. Accordingly, with the material for additive manufacturing of the present disclosure, additive manufacturing is easily performed, and an object having a high density and excellent shape retention can be produced.

The present disclosure can provide a material for additive manufacturing, with which additive manufacturing is easily performed and an object having excellent shape retention can be produced.

### <Powder A>

The powder A includes an alloy or a pure metal.

In the present specification, the "pure metal" refers to a single metal, and the "alloy" refers to a metal-like material including two or more elements.

The pure metal of the powder A is not particularly limited, and may be appropriately selected according to the intended purpose. Examples of the pure metal include aluminum (Al), tungsten (W), titanium (Ti), molybdenum (Mo), niobium (Nb), silicon (Si), copper (Cu), tin (Sn), magnesium (Mg), iron (Fe), manganese (Mn), nickel (Ni), zinc (Zn), and chromium (Cr). Among the above-listed examples, the pure metal of the powder A is preferably aluminum.

The alloy of the powder A is not particularly limited, and may be appropriately selected according to the intended purpose. Examples of the alloy include alloys including two or more metals selected from the group consisting of aluminum (Al), tungsten (W), titanium (Ti), molybdenum (Mo), niobium (Nb), silicon (Si), copper (Cu), tin (Sn), magnesium (Mg), iron (Fe), manganese (Mn), nickel (Ni), zinc (Zn), and chromium (Cr). Among the above-listed examples, the alloy of the powder A is preferably an aluminum alloy, more preferably an aluminum alloy including at least one selected from the group consisting of silicon, magnesium, iron, and copper, yet more preferably an Al-Cu alloy, an Al-Mn alloy, an Al-Mg alloy, an Al-Si alloy, an Al-Si-Mg alloy, an Al-Si-Cu alloy, an Al-Zn-Mg alloy, an Al-Li alloy, or an Al-Fe alloy, and particularly preferably an Al-Si alloy or an Al-Fe alloy.

In the case where the powder A is a powder of the aluminum alloy, an amount of the aluminum relative to a total mass of the aluminum alloy is not particularly limited, and may be appropriately selected according to the intended purpose. The amount of the aluminum is preferably 96% by mass or greater and 99% by mass or less, and more preferably 97% by mass or greater and 99% by mass or less, relative to a total mass of the aluminum alloy. When the amount of the aluminum is 96% by mass or greater and 99% by mass or less relative to a total mass of the aluminum alloy of the powder A, a low liquid phase ratio of the powder A is easily controlled compared to an aluminum alloy having a high content of one or more metal elements other than aluminum so that shape retention of a sintered compact can be improved.

In the case where the powder A is a powder of the aluminum alloy, an amount of one or more metals other than the aluminum relative to a total mass of the aluminum alloy is not particularly limited, except that the material for additive manufacturing has a temperature range in which a liquid phase ratio of the powder A is 30% by mass or less relative to a total mass of the powder A, and a liquid phase ratio of the powder B is 70% by mass or greater relative to a total mass of the powder B. The amount of the one or more metals other than the aluminum may be appropriately selected according to the intended purpose.

In the case where the aluminum alloy of the powder A is an Al-Si alloy, an amount of the silicon relative to a total mass of the Al-Si alloy is not particularly limited, and may be appropriately selected according to the intended purpose. The amount of the silicon is preferably 1% by mass or greater and 4% by mass or less, and more preferably 1% by mass or greater and 3% by mass or less. When the amount of the silicon is 1% by mass or greater and 4% by mass or less relative to a total mass of the Al-Si alloy of the powder A, a low liquid phase ratio of the powder A is easily controlled compared to an Al-Si alloy having a high Si content so that shape retention of a sintered compact can be improved.

In the case where the aluminum alloy of the powder A is an Al-Fe alloy, an amount of the iron relative to a total mass of the Al-Fe alloy is not particularly limited, and may be appropriately selected according to the intended purpose. The amount of the iron is preferably 1% by mass or greater and 3% by mass or less, and more preferably 1% by mass or greater and 2% by mass or less, relative to a total mass of the Al-Fe alloy. When the amount of the iron is 1% by mass or greater and 3% by mass or less relative to a total mass of the Al-Fe alloy of the powder A, a low liquid phase ratio of the powder A is easily controlled compared to an Al-Fe alloy having a high Fe content so that shape retention of a sintered compact can be improved.

### <Powder B>

The powder B includes an alloy having a composition different from a composition of the powder A.

The alloy of the powder B is not particularly limited, except that the alloy has a composition different from a composition of the powder A. The alloy of the powder B may be appropriately selected according to the intended purpose. Examples of the alloy include alloys including two or more metals selected from the group consisting of aluminum (Al), tungsten (W), titanium (Ti), molybdenum (Mo), niobium (Nb), silicon (Si), copper (Cu), tin (Sn), magnesium (Mg), iron (Fe), manganese (Mn), nickel (Ni), zinc (Zn), and chromium (Cr). Among the above-listed examples, the alloy of the powder B is preferably an aluminum alloy, more preferably an aluminum alloy including at least one selected from the group consisting of silicon, magnesium, iron, and copper, yet more preferably an Al-Cu alloy, an Al-Mn alloy, an Al-Mg alloy, an Al-Si alloy, an Al-Si-Mg alloy, an Al-Si-Cu alloy, an Al-Zn-Mg alloy, an Al-Li alloy, or an Al-Fe alloy, and particularly preferably an Al-Si alloy, an Al-Cu alloy, or an Al-Si-Mg alloy.

In the case where the powder B is a powder of the aluminum alloy, an amount of the aluminum relative to a total mass of the aluminum alloy is not particularly limited, and may be appropriately selected according to the intended purpose. The amount of the aluminum is preferably 86% by mass or greater and 92% by mass or less, and more preferably 88% by mass or greater and 90% by mass or less, relative to a total mass of the aluminum alloy. When the amount of the aluminum is 86% by mass or greater and 92% by mass or less relative to a total mass of the aluminum alloy of the powder B, the powder B is completely melted at a low temperature so that densification of a sintered compact can be easily achieved.

In the case where the powder B is a powder of the aluminum alloy, an amount of one or more metals other than the aluminum relative to a total mass of the aluminum alloy is not particularly limited, except that the material for additive manufacturing has a temperature range in which a liquid phase ratio of the powder A is 30% by mass or less relative to a total mass of the powder A, and a liquid phase ratio of the powder B is 70% by mass or greater relative to a total mass of the powder B. The amount of the one or more metals other than the aluminum may be appropriately selected according to the intended purpose.

In the case where the aluminum alloy of the powder B is an Al-Si alloy or Al-Si-Mg alloy, an amount of the silicon relative to a total mass of the Al-Si alloy or Al-Si-Mg alloy is not particularly limited, and may be appropriately selected according to the intended purpose. The amount of the silicon is preferably 8% by mass or greater and 14% by mass or less, and more preferably 10% by mass or greater and 12% by mass or less, relative to a total mass of the Al-Si alloy or Al-Si-Mg alloy. When the amount of the silicon is 8% by mass or greater and 14% by mass or less relative to a total mass of the Al-Si alloy or Al-Si-Mg alloy of the powder B, the powder B is completely melted at a low temperature so that densification of a sintered compact can be easily achieved.

In the case where the aluminum alloy is an Al-Cu alloy, an amount of the copper relative to a total mass of the Al-Cu alloy is not particularly limited, and may be appropriately selected according to the intended purpose. The amount of the copper is preferably 25% by mass or greater and 35% by mass or less, and more preferably 30% by mass or greater and 33% by mass or less, relative to a total mass of the Al-Cu alloy. When the amount of the copper is 25% by mass or greater and 35% by mass or less relative to a total mass of the Al-Cu alloy of the powder B, the powder B is completely melted at a low temperature so that densification of a sintered compact can be easily achieved.

In the case where the aluminum alloy is an Al-Si-Mg alloy, an amount of the magnesium relative to a total mass of the Al-Si-Mg alloy is not particularly limited, and may be appropriately selected according to the intended purpose. The amount of the magnesium is preferably 0.1% by mass or greater and 3% by mass or less, and more preferably 0.2% by mass or greater and 1% by mass or less, relative to a total mass of the Al-Si-Mg alloy. When the amount of the magnesium is 0.1% by mass or greater and 3% by mass or less relative to a total mass of the Al-Si-Mg alloy of the powder B, the powder B is completely melted at a low temperature so that densification of a sintered compact can be easily achieved. Moreover, a mechanical strength of the sintered compact is improved compared to a case where an alloy that does not include magnesium is used as the powder B.

Within the material for additive manufacturing, the powder A or the powder B, or both the powder A and the powder B preferably include or are composed of an aluminum alloy, in view of reduction of weights of sintered parts (sintered compacts) and improvement of thermal conductivity.

### <<Liquid phase ratio>>

The material for additive manufacturing has a temperature range in which a liquid phase ratio of the powder A is 30% by mass or less relative to a total mass of the powder A, and a liquid phase ratio of the powder B is 70% by mass or greater relative to a total mass of the powder B.

The powder A having a liquid phase ratio of 30% by mass or less relative to a total mass of the powder A and the powder B having a liquid phase ratio of 70% by mass or greater relative to a total mass of the powder B are mixed in the material for additive manufacturing. Therefore, a state where the powder B is started to melt but the powder A is rarely melted can be created during sintering without highly precise control of a sintering temperature, so that forming failures or sintering failures are minimized. The liquid phase ratios of the powder A and the powder B are not limited, except that the melted state of the powder A and the melted state of the powder B are different during sintering, as described above. Therefore, the lower limit of the liquid phase ratio of the powder A relative to a total mass of the powder A is not particularly limited, and may be 0% by mass. Similarly, the upper limit of the liquid phase ratio of the powder B relative to a total mass of the powder B is not particularly limited, and may be 100% by mass.

In the present specification, the liquid phase ratio of the powder A and the liquid phase ratio of the powder B may be determined by simulations using thermodynamic calculation software (CaTCalc, available from Research Institute of Computational Thermodynamics, Inc.).

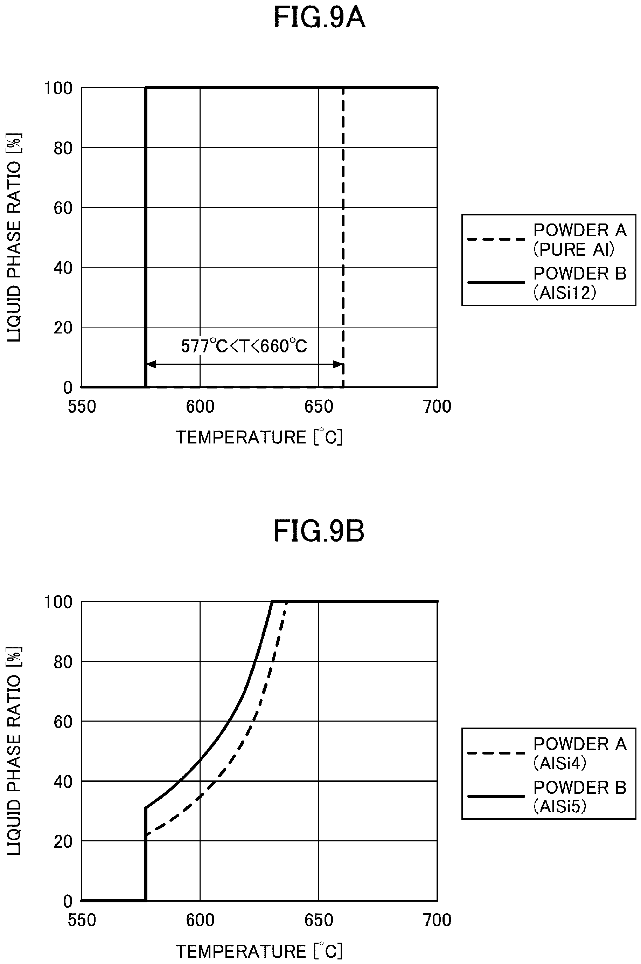

Specifically, a composition of each metal used in the material for additive manufacturing, a temperature range, and a pressure are input into the thermodynamic calculation software to calculate a liquid phase ratio of the powder A and a liquid phase ratio of the powder B. For example, when, as compositions of the metals, "Al: 100% by mass" is input as a parameter for the powder A, "Al: 88% by mass" and "Si: 12% by mass" are input as parameters for the powder B, "550°C to 700°C" is input as a temperature range, and "101,325 Pa" is input as a pressure, a calculation result as presented in Fig. 9A can be obtained.

As a method for determining a liquid phase ratio of the powder A and a liquid phase ratio of the powder B without using the simulation, there is a method where a metal composition in a semi-melted state is rapidly cooled and solidified to solidify the liquid phase and a cross-section of the metal composition is observed under a microscope to calculate a liquid phase ratio. According to the above-described method, rapid cooling is performed to solidify the metal composition observed on the cross-section so that it is difficult to accurately measure a liquid phase ratio. Moreover, the above-described method has problems such that the method cannot be applied for a metal whose liquid phase may not be clearly identified on the cross-section of the metal composition and there are many steps to perform to acquire the intended data. Conversely, the above-described simulation can highly accurately and promptly calculate a liquid phase ratio of any metal. Therefore, the liquid phase ratio of the powder A and the liquid phase ratio of the powder B are suitably determined by the simulation.

### «Particle size»

A percentage of particles having a particle size of 106 µm or greater to a group of particles constituting the powder A is not particularly limited, and may be appropriately selected according to the intended purpose. The percentage of the particles having the particle size of 106 µm or greater is preferably less than 10% by mass. When the percentage of the particles having the particle size of 106 µm or greater to the group of the particles constituting the powder A is less than 10% by mass, it is possible to form a sintering precursor at a narrow layer-stacking pitch to improve dimensional precision of a sintered compact. Since the percentage of particles of a large particle size is small, the number of contact points between particles within a resulting sintering precursor is increased to increase a relative density of a sintered compact. As described above, the smaller percentage of the particles having a particle size of 106 µm or greater to the group of particles constituting the powder A is more preferred. Therefore, the lower limit of the percentage of the particles having the particle size of 106 µm or greater to the group of the particles constituting the powder A is not particularly limited, and may be 0% by mass.

A percentage of particles having a particle size of 106 µm or greater to a group of particles constituting the powder B is not particularly limited, and may be appropriately selected according to the intended purpose. The percentage of the particles having the particle size of 106 µm or greater is preferably less than 10% by mass. When the percentage of the particles having the particle size of 106 µm or greater to the group of the particles constituting the powder B is less than 10% by mass, it is possible to form a sintering precursor at a narrow layer-stacking pitch to improve dimensional precision of a sintered compact. Since the percentage of particles of a large particle size is small, the number of contact points between particles within a resulting sintering precursor is increased to increase a relative density of a sintered compact. As described above, the smaller percentage of the particles having a particle size of 106 µm or greater to the group of particles constituting the powder B is more preferred. Therefore, the lower limit of the percentage of the particles having the particle size of 106 µm or greater to the group of the particles constituting the powder B is not particularly limited, and may be 0% by mass.

Moreover, it is more preferred that the percentage of the particles having the particle size of 106 µm or greater to the group of the particles constituting the powder A is less than 10% by mass, and the percentage of the particles having the particle size of 106 µm or greater to the group of the particles constituting the powder B is less than 10% by mass. Since the percentage of the particles having the particle size of 106 µm or greater is less than 10% by mass in both the powder A and the powder B, it is possible to form a sintering precursor at a narrow layer-stacking pitch to improve dimensional precision of a sintered compact. Since the percentage of particles of a large particle size is small, the number of contact points between particles within a resulting sintering precursor is increased to increase a relative density of a sintered compact.

The percentage of particles having a particle size of 106 µm or greater to the group of particles of the powder A, and the percentage of particles having a particle size of 106 µm or greater to the group of the particles of the powder B can be determined, for example, by a sieving test.

In the present specification, a "relative density" of a sintering precursor or a sintered compact is a relative density measured by the Archimedes method.

A particle size of the powder A is not particularly limited, and may be appropriately selected according to the intended purpose. A median diameter (d50) of the powder A is preferably 25 µm or greater and 80 µm or less, more preferably 35 µm or greater and 55 µm or less, and yet more preferably 45 µm or greater and 55 µm or less. When the median diameter of the powder A is 25 µm or greater, flowability of the powder A during recoating is improved, and a relative density of a resulting sintering precursor is likely to be improved. When the median diameter of the powder A is 80 µm or less, it is possible to form a sintering precursor at a narrow layer-stacking pitch so that dimensional precision of a sintered compact can be improved. When the median diameter of the powder A is 80 µm or less, moreover, the number of contact points between particles within a resulting sintering precursor is increased to increase a relative density of a sintered compact.

A particle size of the powder B is not particularly limited, and may be appropriately selected according to the intended purpose. A median diameter (d50) of the powder B is preferably 20 µm or greater and 80 µm or less, more preferably 20 µm or greater and 50 µm or less, and yet more preferably 20 µm or greater and 30 µm or less. When the median diameter of the powder B is 20 µm or greater, flowability of the powder B during recoating is improved so that a relative density of a resulting sintering precursor is improved. When the median diameter of the powder B is 80 µm or less, it is possible to form a sintering precursor at a narrow layer-stacking pitch so that dimensional precision of a sintered compact can be improved. When the median diameter of the powder B is 80 µm or less, moreover, the number of contact points between particles within a resulting sintering precursor is increased to increase a relative density of a sintered compact.

For example, the median diameter (d50) of the powder A and the median diameter (d50) of the powder B can be measured by a particle size distribution analyzer (e.g., Microtrac MT3000II series, available from MicrotracBELL Corporation).

### -First embodiment (median diameter of powder A > median diameter of powder B)-

In the first embodiment, the median diameter of the powder A is preferably greater than the median diameter of the powder B. When the median diameter of the powder A is greater than the median diameter of the powder B, the particles of the powder B are arranged between the particles of the powder A, thus sintering of the material for additive manufacturing achieves a high relative density of a resulting sintered compact. Moreover, the particles of the powder B, which will be turned into a liquid phase, are homogeneously arranged so that a relative density and dimensional precision of a resulting sintered compact are improved.

A ratio [median diameter of powder A : median diameter of powder B] of the median diameter of the powder A to the median diameter of the powder B is not particularly limited, and may be appropriately selected according to the intended purpose. The ratio [median diameter of powder A : median diameter of powder B] is preferably from 1 : 0.3 to 1 : 0.7. When the ratio [median diameter of powder A : median diameter of powder B] is from 1 : 0.3 to 1 : 0.7, the particles of the powder B are arranged between the particles of the powder A, thus sintering of the material for additive manufacturing achieves the higher relative density of a resulting sintered compact. Moreover, the particles of the powder B, which will be turned into a liquid phase, are homogeneously arranged so that a relative density and dimensional precision of a resulting sintered compact are improved further.

It is preferred that the median diameter of the powder A is 45 µm or greater and 55 µm or less, and the median diameter of the powder B is 20 µm or greater and 30 µm or less. When median diameter of the powder A is 45 µm or greater and 55 µm or less, and the median diameter of the powder B is 20 µm or greater and 30 µm or less, the particles of the powder B are arranged between the particles of the powder A, thus sintering of the material for additive manufacturing achieves the high relative density of a resulting sintered compact. Moreover, the particles of the powder B, which will be turned into a liquid phase, are homogeneously arranged so that a relative density and dimensional precision of a resulting sintered compact are improved further.

### -Second embodiment (median diameter of powder A < median diameter of powder B)-

In the second embodiment, the median diameter of the powder B is preferably greater than the median diameter of the powder A. When the median diameter of the powder B is greater than the median diameter of the powder A, a thickness of oxide films on surfaces of particles relative to the volume of particles of the powder B is relatively thin so that the oxide films are easily broken by a liquid phase of the powder B, thus sintering of the material for additive manufacturing achieves a high relative density of a resulting sintered compact.

### <<Amount>>

A volume of the powder B relative to a total volume of the material for additive manufacturing is not particularly limited, and may be appropriately selected according to the intended purpose. The volume of the powder B is preferably 5% by volume or greater, more preferably 10% by volume or greater, and more preferably 15% by volume or greater and 25% by volume or less, relative to a total volume of the material for additive manufacturing. When the volume of the powder B is 5% by volume or greater relative to a total volume of the material for additive manufacturing, the proportion of the powder B, which will be turned into a liquid phase, increases, thus sintering of the material for additive manufacturing achieves a high relative density of a resulting sintered compact. When the volume of the powder B is 10% by volume or greater, an amount of a liquid phase generated during sintering increases, thus sintering of the material for additive manufacturing achieves the higher relative density of a resulting sintered compact. When the volume of the powder B is 15% by volume or greater and 25% by volume or less relative to a total volume of the material for additive manufacturing, sintering of the material for additive manufacturing achieves the higher relative density of a resulting sintered compact. When the volume of the powder B is 25% by volume or less relative to a total volume of the material for additive manufacturing, a desired amount of a liquid phase is generated during sintering so that the shape of a sintered compact can be suitably retained.

### <Other components>

The above-mentioned other components are not particularly limited, except that components used do not adversely affect the effects obtainable by the present disclosure. The above-mentioned other components may be appropriately selected according to the intended purpose. Examples of the above-mentioned other components include additives (e.g., preservers, superplasticizers, reinforcers, flame retardants, plasticizer, thermal stabilizers, and crystal nucleating agents), and polymer particles (e.g., amorphous resin particles). The above-listed examples may be used alone or in combination.

An amount of the above-mentioned other components in the material for additive manufacturing is not particularly limited, except that the above-mentioned other components used do not adversely affect the effects obtainable by the present disclosure. The amount of the above-mentioned other components may be appropriately selected according to the intended purpose.

### (Additive manufacturing method and additive manufacturing apparatus)

The additive manufacturing method of the present disclosure includes formation of a powder layer, solidification of the powder layer, formation of a sintering precursor, and sintering. The formation of a powder layer is a step that includes forming of a powder layer using the material for additive manufacturing of the present disclosure, where the material for additive manufacturing includes a powder A and a powder B. The solidification of the powder layer is a step that includes applying of a resin liquid including a resin to the powder layer to solidify the powder layer. The formation of a sintering precursor is a step that includes repeating of the formation of a powder layer and the solidification of the powder layer to produce a sintering precursor. The sintering is a step that includes sintering of the sintering precursor in a temperature range in which a liquid phase ratio of the powder A is 30% by mass or less relative to a total mass of the powder A, and a liquid phase ratio of the powder B is 70% by mass or greater relative to a total mass of the powder B. The additive manufacturing method may further include other steps, as necessary.

The additive manufacturing method of the present disclosure is suitably performed by the additive manufacturing apparatus of the present disclosure.

The additive manufacturing apparatus of the present disclosure includes a powder layer forming device, a powder layer solidifying device, a sintering precursor forming device, a resin remover, and a sintering machine. The powder layer forming device uses the material for additive manufacturing of the present disclosure including a powder A and a powder B to form a powder layer. The powder layer solidifying device applies a resin liquid including a resin to the powder layer to solidify the powder layer. The sintering precursor forming device repeats an operation of the powder layer forming device and an operation of the powder layer solidifying device to produce a sintering precursor. The resin remover removes the resin from the sintering precursor. The sintering machine sinters the sintering precursor, from which the resin is removed, in a temperature range in which a liquid phase ratio of the powder A is 30% by mass or less relative to a total mass of the powder A, and a liquid phase ratio of the powder B is 70% by mass or greater relative to a total mass of the powder B. The additive manufacturing apparatus of the present disclosure may further include other devices or members, if necessary.

The additive manufacturing apparatus of the present disclosure will be described together with the additive manufacturing method of the present disclosure hereinafter.

### <Formation of powder layer and powder layer forming device>

The formation of a powder layer is a step that includes forming of a powder layer using the material for additive manufacturing of the present disclosure, where the material for additive manufacturing includes a powder A and a powder B.

The powder layer forming device is a device configured to form a powder layer using the material for additive manufacturing of the present disclosure, which includes the powder A and the powder B.

The formation of a powder layer is suitably performed by the powder layer forming device.

The powder layer is preferably formed on a support.

### -Support-

The support is not particularly limited, except that the material for additive manufacturing can be placed on the support. The support may be appropriately selected according to the intended purpose. Examples of the support include a stage having a face on which the material for additive manufacturing is placed, and a base plate.

A surface of the support, namely, a plane of the support on which the material for additive manufacturing is placed, may be a smooth surface or rough surface, or a flat surface or curved surface. The surface of the support preferably has a low affinity to a resin when the resin is dissolved through the material for additive manufacturing.

The affinity between the surface of the support and the dissolved resin is preferably lower than an affinity between the material for additive manufacturing and the dissolved resin so that a resulting object produced through the additive manufacturing can be easily removed from the surface of the support.

### <<Formation of powder layer>>

A method for placing the material for additive manufacturing on the support is not particularly limited, and may be appropriately selected according to the intended purpose. Examples of a method for arranging the material for additive manufacturing into a thin layer suitably include: a method using any counter-rotating mechanism (counter roller) available in the art, which may be typically used in selective laser sintering; a method where the material for additive manufacturing is spread into a thin layer with a member, such as a brush, a roller, and a blade; a method where a surface of a pile of the material for additive manufacturing is pressed to spread into a thin layer using a press member; and a method using any powder-bed additive manufacturing device available in the related art.

For example, a thin layer of the material for additive manufacturing is placed on the support by the counter-rotating mechanism (counter roller), the brush or blade, or the press member in the following manner.

Specifically, the material for additive manufacturing is placed on the support using the counter-rotating mechanism (counter roller), the brush, the roller, the blade, or the press member. The support is disposed inside an outer frame (may be referred to as a "mold," a "hollow cylinder," or a "cylindrical structure") in a manner such that the support can move up and down to slide along an inner wall of the outer frame. In the case where the support can move up and down within the outer frame, the support is set at a position just below an upper edge of an opening of the outer frame (i.e., the position that is lower than the upper edge by a thickness of one layer of an intended powder layer to be formed), and then the material for forming additive manufacturing is placed onto the support. As a result, a thin layer of the material for additive manufacturing can be placed on the support.

### <Solidification of powder layer and powder layer solidifying device>

The solidification of the powder layer is a step that includes applying of a resin liquid including a resin (may be referred to as a "modeling liquid" or a "liquid binder" hereinafter) to the powder layer to solidify the powder layer.

The powder layer solidifying device is a device that applies a resin liquid including a resin to the powder layer to solidify the powder layer.

The solidification of the powder layer is suitably performed by the powder layer solidifying device.

As the resin liquid is applied to the powder layer during the solidification of the powder layer, the powder layer is solidified.

### -Resin liquid (modeling liquid or liquid binder)-

The resin liquid is not particularly limited, except that the resin liquid includes at least a resin. The resin liquid may be appropriately selected according to the intended purpose. The resin liquid may further include other components, as necessary.

The resin liquid is used as a binder for sintering the material for additive manufacturing, thus the resin liquid may be referred to as a "liquid binder" or a "modeling liquid."

### --Resin--

The resin is not particularly limited, and may be appropriately selected from resins typically used for sintering in the related art. Examples of the resin include vinyl-based resins, such as polyvinyl acetate resins, partially saponified polyvinyl acetate resins, and polyvinyl butyral resins. The above-listed examples may be used alone or in combination.

An amount of the resin is not particularly limited, and may be appropriately selected according to the intended purpose. The amount of the resin is preferably 5.0% by mass or greater, more preferably 7.0% by mass or greater, yet more preferably 10.0% by mass or greater, and particularly preferably 11.0% by mass or greater, relative to a total mass of the resin liquid. Moreover, the amount of the resin is preferably 30.0% by mass or less, more preferably 25.0% by mass or less, and yet more preferably 20.0% by mass or less, relative to a total mass of the resin liquid. When the amount of the resin is 5.0% by mass or greater and 30.0% by mass or less, a viscosity of the resin liquid becomes suitable for discharging through inkjet.

### --Other components--

The above-mentioned other components in the resin liquid are not particularly limited, and may be appropriately selected according to the intended purpose. Examples of the above-mentioned other components include surfactants, anti-drying agents, viscosity modifiers, penetrating agents, defoamers, pH regulators, antiseptic agents, antifungal agents, colorants (e.g., dyes and pigments), preservatives, and stabilizers. The above-listed examples may be used alone or in combination. As the above-mentioned other components, any materials available in the related art may be used. An amount of the above-mentioned other components is not particularly limited, and may be appropriately selected according to the intended purpose. A total amount of the above-mentioned other components is preferably 10% by mass or less relative to a total mass of the resin liquid.

### ---Solvent---

Examples of the solvent include n-octane, m-xylene, solvent naphtha, diisobutyl ketone, 3-heptanone, 2-octanone, acetyl acetone, butyl acetate, amyl acetate, n-hexyl acetate, n-octyl acetate, ethyl butyrate, ethyl valerate, ethyl caprylate, ethyl octanoate, ethyl acetoacetate, ethyl 3-ethoxypropionate, diethyl oxalate, diethyl maloate, diethyl succinate, diethyl adipate, bis-2-ethylhexyl maleate, triacetin, tributyrin, propylene glycol monomethyl ether acetate, ethylene glycol monobutyl ether acetate, dibutyl ether, 1,2-dimethoxybenzene, 1,4-dimethoxybenzene, diethylene glycol monobutyl ether, diethylene glycol dimethyl ether, triethylene glycol dimethyl ether, 2-methoxy-1-methylethyl acetate, γ-butyrolactone, propylene carbonate, cyclohexanone, and butyl cellosolve. The above-listed examples may be used alone or in combination.

An amount of the solvent is not particularly limited, and may be appropriately selected according to the intended purpose. The amount of the solvent is preferably 60.0% by mass or greater and 95.0% by mass or less, and more preferably 70.0% by mass or greater and 95.0% by mass or less, relative to a total mass of the resin liquid. When the amount of the solvent is 60.0% by mass or greater and 95.0% by mass or less, solubility of the resin is improved so that a viscosity of the resin liquid can be reduced. The resin liquid having the reduced viscosity can be suitably discharged, for example, by inkjetting. Moreover, drying of the resin liquid within the powder layer solidifying device can be minimized so that the resin liquid achieves excellent jet stability.

### «Application of resin liquid to powder layer»

A method for applying the resin liquid to the powder layer is not particularly limited, and may be appropriately selected according to the intended purpose. Examples of the method include dispensing, spraying, and inkjetting. In order to perform the above-mentioned application method, any of devices available in the related art may be suitably used as the powder layer solidifying device.

The dispensing realizes excellent quantitative discharge of droplets, but an application area of the resin liquid may be narrow.

The spraying can easily form fine jet droplets, and achieves a wide application area and excellent coatability. However, quantitative discharge of droplets may not be achieved, and scattering of the material for additive manufacturing may occur through spray flows.

The method for applying the resin liquid to the powder layer is particularly preferably inkjetting. The inkjetting achieves more excellent quantitative discharge of droplets compared to the spraying, and achieves the wider application area than the application area achieved by the dispensing. Therefore, the inkjetting is preferred because a complicated three-dimensional shape can be efficiently formed with high accuracy.

In the case where the application method is inkjetting, examples of the powder layer solidifying device used include a nozzle capable of applying the resin liquid to the powder layer through inkjetting, and an inkjet printer including one or more nozzles.

As the nozzle, a nozzle (jet head) typically used in any inkjet printer available in the related art is suitably used.

Suitable examples of the inkjet printer include SG7100 available from Ricoh Company Limited. The inkjet printer is preferred because a large amount of the resin liquid can be dropped from a head at once and the resin liquid can be applied over a wide area, enabling the application of the resin liquid at high speed.

### <Formation of sintering precursor and sintering precursor forming device>

The formation of a sintering precursor is a step that repeats the formation of a powder layer and the solidification of the powder layer to produce a sintering precursor.

The sintering precursor forming device is a device configured to repeat an operation of the powder layer forming device and an operation of the powder layer solidifying device to produce a sintering precursor.

The formation of a sintering precursor is suitably performed by the sintering precursor forming device.

On the thin layer of the sintering precursor (compact) obtained in the formation of a powder layer, a thin layer of the material for additive manufacturing is placed in the similar manner, and the resin liquid is applied onto the freshly placed thin layer of the material for additive manufacturing (powder layer) to solidify the powder layer. The solidification occurs not only among the freshly placed thin layer of the material for additive manufacturing (powder layer), but also occurs between the freshly placed thin layer and the previously solidified thin layer of the sintering precursor (compact) below the powder layer. As a result, a compact (sintering precursor) having a thickness that is equivalent to an approximate combined thickness of the two thin layers of the material for additive manufacturing (powder layers) is obtained.

Moreover, the material for additive manufacturing is automatically and easily arranged into a thin layer and placed on the support by a powder-bed additive manufacturing device available in the related art. The powder-bed additive manufacturing device available in the related art typically includes a recoater, a movable supply tank, and a movable modeling tank. The recoater is configured to stack layers of the material for additive manufacturing. The movable supply tank is configured to supply the material for additive manufacturing onto the support. The movable modeling tank is configured to arrange the material for additive manufacturing into a thin layer to stack the layers of the material for additive manufacturing.

In the powder-bed additive manufacturing device, the movable supply tank is lifted, or the movable modeling tank is lowered, or both, so that a surface of the movable supply tank is lifted to always be slightly higher than a surface of the movable modeling tank. The material for additive manufacturing is moved from the side of the movable supply tank by the recorder to arrange the material for additive manufacturing into a thin layer. As the operation of the recoater is repeated, thin layers of the material for additive manufacturing can be stacked.

A thickness of the additive manufacturing material layer is not particularly limited, and may be appropriately selected according to the intended purpose. As the thickness of the additive manufacturing material layer, an average thickness of a single layer of the additive manufacturing material layer is preferably 20 µm or greater and less than 200 µm, and more preferably 60 µm or greater and 100 µm or less. When the average thickness of the additive manufacturing material layer is 20 µm or greater, a compact (sintering precursor) of the additive manufacturing material layer formed by applying the resin liquid to the material for additive manufacturing has a sufficient strength so that the shape of the compact can be retained without collapsing during the later processing, such as sintering, or handling. When the average thickness of the additive manufacturing material layer is less than 200 µm, a compact (sintering precursor) of the additive manufacturing material layer formed by applying the resin liquid to the material for additive manufacturing has improved dimensional precision, an appropriate size of a step between stacked layers can be achieved, and sintering failures can be minimized.

An average thickness of the additive manufacturing material layer can be adjusted with a value input into the additive manufacturing apparatus. A method for measuring the average thickness of the additive manufacturing material layer is not particularly limited. The average thickness of the additive manufacturing material layer can be measured according to any method available in the related art.

### <Removal of resin and resin remover>

The removal of the resin is a step that includes removing of the resin from the sintering precursor.

The resin remover is a device configured to remove the resin from the sintering precursor.

The removal of the resin is suitably performed by the resin remover.

Since the removal of the resin is performed, a resin component in a compact (sintering precursor) of the powder layer formed by the solidification of the powder layer can be removed.

The removal of the resin component may not be complete removal of the resin component. Specifically, a residual amount of the resin component in the sintering precursor may be greater than 0% by mass. However, the residual amount of the resin component in the sintering precursor is preferably as close to 0% by mass as possible, because a density of a sintered compact after sintering is improved.

Examples of the resin remover include degreasing furnaces available in the related art.

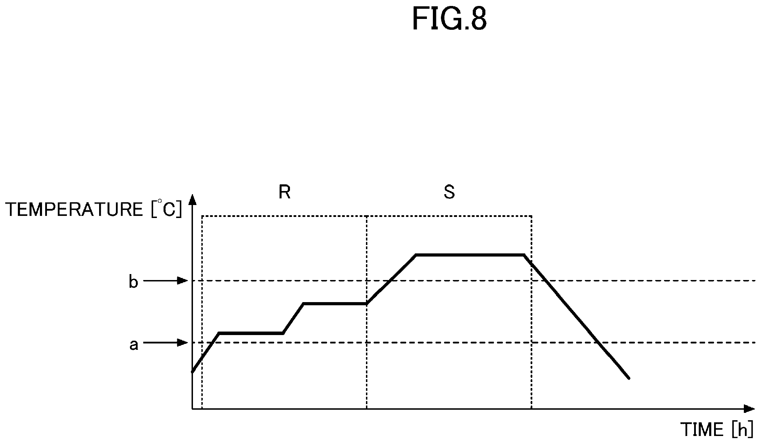

A temperature for the removal of the resin will be explained hereinafter with reference to Fig. 8.

Fig. 8 is a graph depicting a relationship between the progress of the removal of the resin (R) and the sintering (S) of the additive manufacturing method of the present disclosure, and the temperature of the material for additive manufacturing of the present disclosure.

In the removal of the resin (R), the resin component included in the resin liquid is decomposed at a temperature that is higher than a thermal decomposition temperature (a) of the resin and lower than melting points or solidus temperatures (b) of an alloy or pure metal of the powder A and an alloy of the powder B in the material for additive manufacturing. Depending on a resin component used, two or more temperatures, at which the temperature(s) are retained during heating, may be set. Moreover, it is also possible to remove the resin through solvent extraction, in which the sintering precursor is immersed in a solvent to extract the resin.

In Fig. 8, "R" represents the removal of the resin, "S" represents the sintering, "a" represents the decomposition temperature of the resin, and "b" represents the solidus temperature.

### <Sintering and sintering machine>

The sintering is a step that includes sintering of the sintering precursor, from which the resin is removed, in a temperature range in which a liquid phase ratio of the powder A is 30% by mass or less relative to a total mass of the powder A, and a liquid phase ratio of the powder B is 70% by mass or greater relative to a total mass of the powder B.

The sintering machine is a device that sinters the sintering precursor, from which the resin is removed, in a temperature range in which a liquid phase ratio of the powder A is 30% by mass or less relative to a total mass of the powder A, and a liquid phase ratio of the powder B is 70% by mass or greater relative to a total mass of the powder B.

The sintering is suitably performed by the sintering machine.

Since the sintering is performed, a density of a compact (sintering precursor) of the powder layer formed by the solidification of the powder layer is increased to form a sintered compact in which the metals are unified to form one body.

Examples of the sintering machine include sintering furnaces available in the related art.

The removal of the resin and the sintering may be consecutively performed by the same sintering furnace, or the removal of the resin and the sintering may be performed separately by a degreasing furnace and a sintering furnace.

However, it is important that the temperature of the sintering furnace, which is also used as the degreasing furnace, the temperature of the degreasing furnace, or the temperature of the sintering furnace used for the sintering is adjustable so that a sintering temperature can be adjusted to a temperature range in which a liquid phase ratio of the powder A is 30% by mass or less relative to a total mass of the powder A, and a liquid phase ratio of the powder B is 70% by mass or greater relative to a total mass of the powder B.

A temperature of the sintering will be described hereinafter with reference to Fig. 8.

A temperature range ratio of the sintering is a temperature range in which a liquid phase ratio of the powder A is 30% by mass or less relative to a total mass of the powder A, and a liquid phase ratio of the powder B is 70% by mass or greater relative to a total mass of the powder B. The sintering precursor, which has been subjected to the removal of the resin, is heated to a temperature in the above-mentioned temperature range at the heating speed of from 1 °C/h to 200 °C/h (the heating speed may be changed in the middle of the heating process), followed by retaining the temperature for approximately 1 hour to approximately 10 hours. After heating and retaining the temperature in the sintering as described above, the sintering precursor is cooled inside the furnace to obtain a sintered compact.

The atmosphere, in which the removal of the resin and the sintering are performed, is not particularly limited, and may be appropriately selected according to the intended purpose. For example, the removal of the resin and the sintering are preferably performed in an atmosphere, such as vacuum, argon (Ar), hydrogen (H₂), or nitrogen (N₂).

Since the sintering is performed by the sintering machine, the sintering precursor is sintered in the temperature range in which a liquid phase ratio of the powder A is 30% by mass or less relative to a total mass of the powder A, and a liquid phase ratio of the powder B is 70% by mass or greater relative to a total mass of the powder B. Therefore, a resulting additive manufacturing object (sintered compact) has a high density and excellent shape retention.

### <Other steps and other devices or members>

Examples of the above-mentioned other steps include drying, surface protection processing, and coating.

Examples of the above-mentioned other devices or members include a powder storage, a resin liquid storage, a dryer, a surface protection processor, and a coater.

### <<Powder storage>>

The powder storage is a member in which the material for additive manufacturing is accommodated.

The size, shape, and material of the powder storage are not particularly limited, and may be appropriately selected according to the intended purpose. Examples of the powder storage include reservoir tanks, bags, cartridges, and tanks.

### <<Resin liquid storage>>

The resin liquid storage is a member in which the resin liquid is accommodated.

The size, shape, and material of the resin liquid storage are not particularly limited, and may be appropriately selected according to the intended purpose. Examples of the resin liquid storage include reservoir tanks, bags, cartridges, and tanks.

### <<Drying and dryer>>

The drying is a step that includes drying of a compact (sintered precursor) obtained by the solidification of the powder layer. During the drying, organic matter in the compact may be removed (removal of a resin or degreasing) as well as removing the moisture in the compact.

The dryer is a device configured to dry a compact (sintered precursor) obtained by the solidification of the powder layer.

Examples of the dryer include drying machines available in the related art.

### <<Surface protection processing and surface protection processor>>

The surface protection processing is a step that include forming of a protective layer on a surface of the compact (sintering precursor) formed in the solidification of the powder layer. As the surface protection processing is performed, for example, durability can be imparted to a surface of the compact (sintering precursor) so that the compact (sintering precursor) can be used as it is.

Specific examples of the protective layer include water-proof layers, water resistant layers, light resistance layers, thermal insulation layers, and gloss layers.

The surface protection processor is a device or member configured to form a protective layer on a surface of the compact (sintering precursor) formed in the solidification of the powder layer.

Examples of the surface protection processor include surface protection processing devices available in the related art, such as sprays and coaters.

### <<Coating and coater>>

The coating is a step that includes coating a compact (sintering precursor) formed by the solidification of the powder layer. A desired color may be applied to the compact (sintering precursor) by the coating.

The coater is a device configured to coat a compact (sintering precursor) formed by the solidification of the powder layer.

Examples of the coater include coating devices available in the related art, such as spray coaters, roller coaters, and brush coaters.

Embodiments of the material for additive manufacturing of the present disclosure, the additive manufacturing method according to binder jetting (BJT) and additive manufacturing apparatus using the material for additive manufacturing will be described with reference to drawings hereinafter. The BJT is one example of a method of additive manufacturing, and additive manufacturing used in the present disclosure is not limited to BJT.

Throughout the drawings, the same reference numeral is given to the identical structural member, and duplication of description for the identical structural member may be omitted. The number, position, shape, etc. of any of the following structural members are not limited to the embodiments described below, and any number, position, shape, etc. suitable for carrying out the present disclosure may be used.

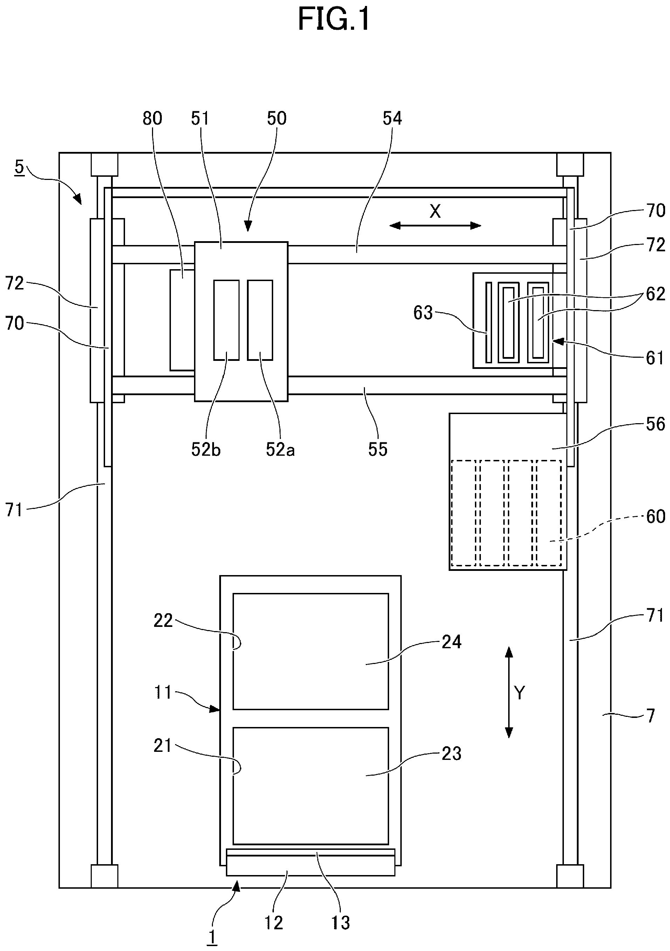

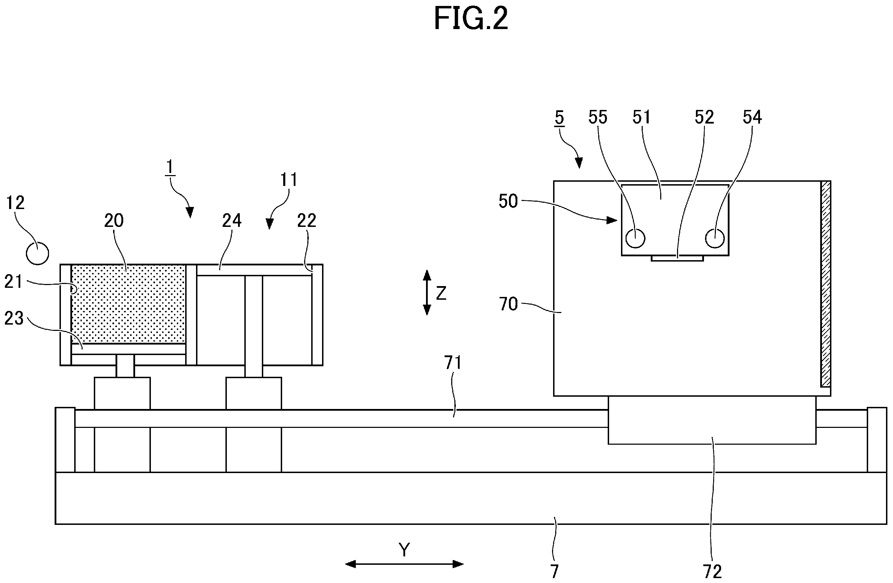

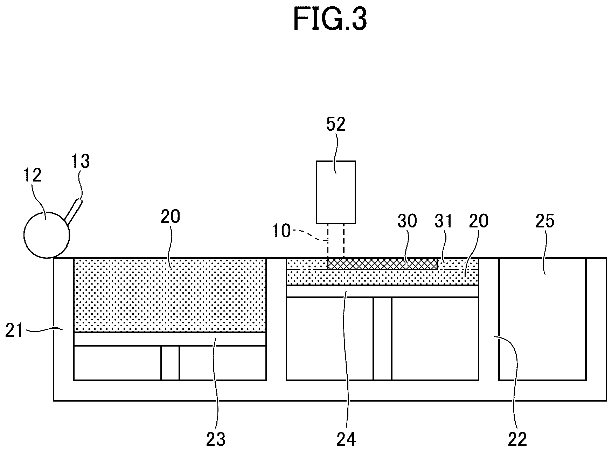

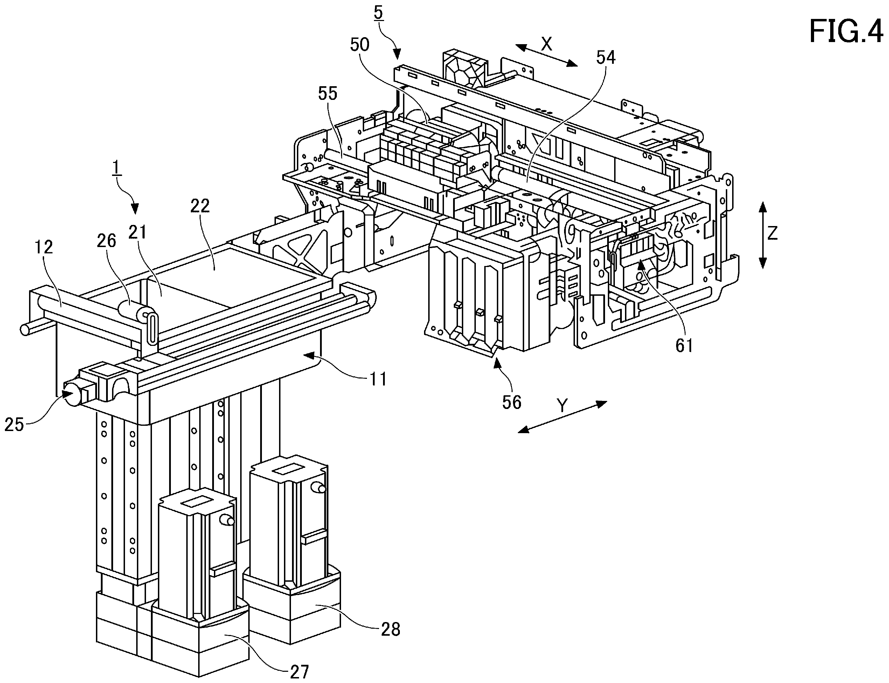

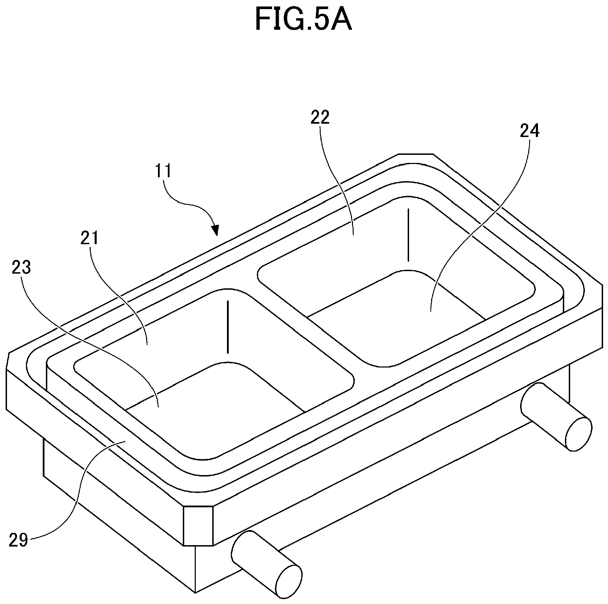

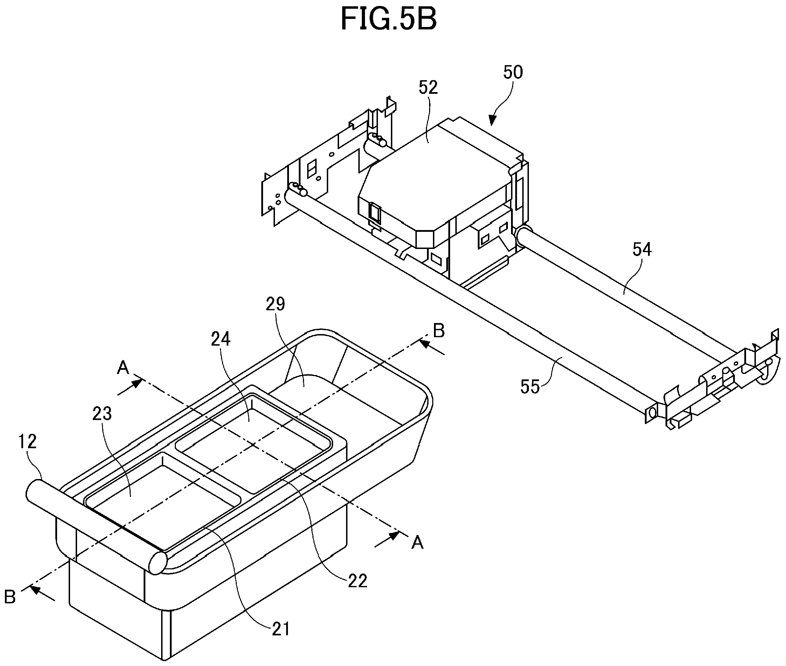

Fig. 1 is a schematic cross-sectional view illustrating an example of the additive manufacturing apparatus of the present disclosure. Fig. 2 is a schematic side view illustrating the additive manufacturing apparatus of Fig. 1. Fig. 3 is a schematic cross-sectional view illustrating an example of a modeling section of the additive manufacturing apparatus of Fig. 1. Fig. 4 is a schematic perspective view of the additive manufacturing apparatus of Fig. 1. Fig. 5A is a schematic perspective view illustrating an example of a powder tank of the additive manufacturing apparatus of Fig. 1. Fig. 5B is a schematic perspective view illustrating an example of a supply tank and a modeling tank of the additive manufacturing apparatus of Fig. 1.

The additive manufacturing apparatus is also referred to as a powder-bed additive manufacturing device. The additive manufacturing apparatus includes a modeling section 1 and a modeling device 5. In the modeling section 1, a modeling layer 30 is formed. The modeling layer 30 is a layer compact formed by solidifying a material for additive manufacturing (including a powder A and powder B). The modeling device 5 is configured to apply a modeling liquid (resin liquid) 10 to a powder layer 31 that is a layered material for additive manufacturing placed in the modeling section 1 to form an additive manufacturing object.

The modeling section 1 includes a powder tank 11 and a leveling roller 12. The leveling roller 12 is a roller serving as a leveling member (recoater). As the leveling member, for example, a plate member (e.g., blade) may be used instead of a roller.

The powder tank 11 includes a supply tank 21 and a modeling tank 22. The supply tank 21 is configured to supply the material for additive manufacturing 20. In the modeling tank 22, the modeling layers 30 are stacked to form an additive manufacturing object. A supply stage 23 constitutes the bottom of the supply tank 21, and the supply stage 23 is freely lifted and lowered along a vertical direction (height direction). Similarly, a modeling stage 24 constitutes the bottom of the modeling tank 22, and the modeling stage 24 is freely lifted and lowered along a vertical direction (height direction. An additive manufacturing object, in which the modeling layers 30 are stacked, is formed on the modeling stage 24. As illustrated in Fig. 4, for example, the supply stage 23 is lifted and lowered by a motor 27 along the direction indicated with the arrow Z (height direction). Similarly, the modeling stage 24 is lifted and lowered by a motor 28 along the direction indicated with the arrow Z.

As illustrated in Fig. 5A, a powder outlet 29 (omitted in Figs. 1 and 3) is disposed at the periphery of the powder tank 11. The powder outlet has a concave shape where the upper plane of the powder outlet is open. Among the material for additive manufacturing 20 supplied by the leveling roller 12 during the formation of the powder layer 31, the excessive material for additive manufacturing 20 is allowed to drop into the powder outlet 29. The excess material for additive manufacturing 20 caught in the powder outlet 29 is returned to a below-described powder feeder 554 configured to supply the material for additive manufacturing to the supply tank 21.

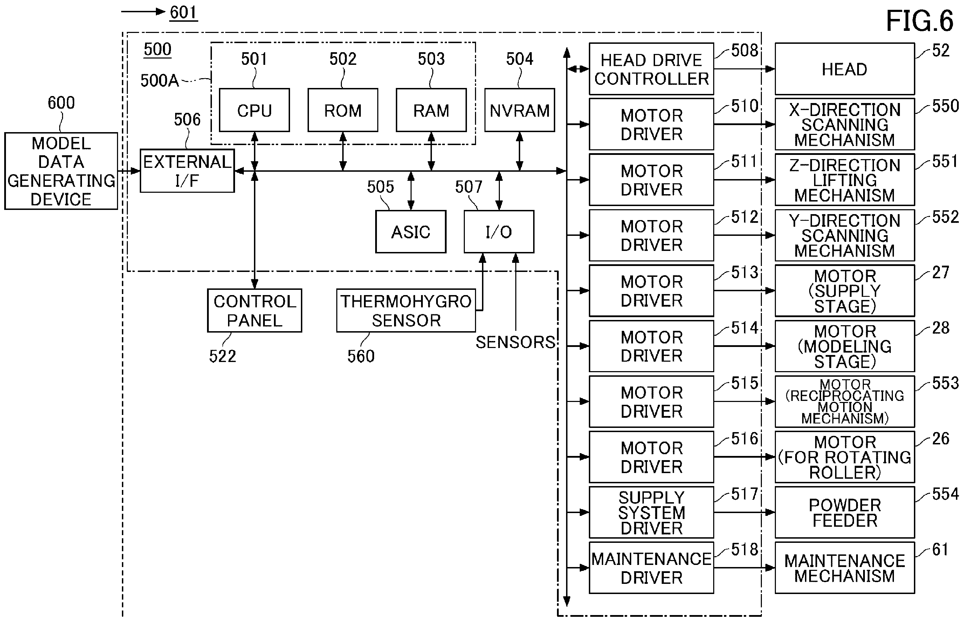

The powder feeder 554 of Fig. 6 is disposed above the supply tank 21. The powder feeder 554 supplies the material for additive manufacturing 20 from a tank constituting the powder feeder 554 to the supply tank 21 at an initial stage of a modeling process, or when an amount of the powder inside the supply tank 21 is low. Examples of a transportation method for feeding the material for additive manufacturing include a screw conveyer method using screws, and an air transportation method using an air flow.

The leveling roller 12 supplies the material for additive manufacturing 20, which is fed on the supply stage 23 of the supply tank 21, to the modeling tank 22, and levels the supplied material for additive manufacturing 20 with the leveling roller 12 serving as a leveling member to form a powder layer 31. The leveling roller 12 is disposed movably with reciprocating motions in the direction indicated with the arrow Y in Fig. 4 along the plane of the modeling stage 24 (the plane on which the material for additive manufacturing 20 is placed) and is moved by a reciprocating motion mechanism 25. Moreover, the leveling roller 12 is rotationally driven by a motor 26.

As illustrated in Fig. 3, a powder removing blade 13, which is a powder removing member configured to remove the material for additive manufacturing 20 deposited on the leveling roller 12, is disposed to be in contact with the circumferential surface of the leveling roller 12. The powder removing blade 13 moves together with the leveling roller 12 in the state such that the powder removing blade 13 is in contact with the circumferential surface of the leveling roller 12. Moreover, the powder removing plate 13 is arranged to be in a counter direction to a rotation direction of the leveling roller 12 when the leveling roller 12 is rotated to perform leveling.

In the present disclosure, the powder tank 11 of the modeling section 1 has two tanks, the supply tank 21 and the modeling tank 22. However, the powder tank 11 may have a structure where the powder tank 11 includes only the modeling tank 22, and the material for additive manufacturing is supplied from a powder feeder to the modeling tank 22 and the supplied material for additive manufacturing is leveled by a leveling member.

The modeling device 5 includes a liquid jet mechanism 50. The liquid jet mechanism 50 is configured to discharge the modeling liquid 10 onto the powder layer 31 on the modeling stage 24. The modeling device 5 includes a slider portion 72 movably held on a guide member 71 disposed on a base member 7. The entire modeling device 5 can move with reciprocating motions in the Y direction (sub-scanning direction) orthogonal to the X direction. The entire modeling device 5 is driven to move with reciprocating motions in the Y direction by a below-described Y-direction scanning mechanism 552.

As illustrated in Fig. 1, the liquid jet mechanism 50 includes a carriage 51, and two liquid jet heads (may be referred to merely as "heads") 52a and 52b mounted on the carriage 51. The number of the liquid jet heads may be one, or three or more. The liquid jet mechanism 50 is movably disposed with lifting and lowering motions in the direction indicated with the arrow Z in Fig. 2 together with the guide members 54 and 55, and is driven to be lifted and lowered in the Z direction by a below-described Z-direction lifting mechanism 551.

In each of the two heads 52a and 52b (may be referred to merely as "head(s) 52" hereinafter, if the two heads are not distinguished), two nozzle arrays are aligned where each nozzle array includes two or more aligned nozzles from which the modeling liquid is discharged. The structure of the head is not limited to the above-described example. A tank 60 in which the modeling liquid is accommodated is mounted in a tank attachment 56, and the modeling liquid is supplied to the heads 52a and 52b via a supply tube.

An outline of a controller of the additive manufacturing apparatus will be described with reference to Fig. 6. Fig. 6 is a block diagram illustrating one example of a controller of the additive manufacturing apparatus of the present disclosure.

The controller 500 includes a main controller 500A. The main controller 500A includes CPU 501, ROM 502, and RAM 503. The CPU 501 is configured to control the entire additive manufacturing apparatus. The ROM 502 stores programs, including a program for executing controlling of additive manufacturing operations, including control associated with the present disclosure, and other fixed data. The RAM 503 temporarily stores modeling data. Moreover, the controller 500 includes a non-volatile memory (NVRAM) 504 configured to retain the data when the power from a power supply of the device is cut off.

The controller 500 includes ASIC 505 configured to carry out image processing to perform processing of various signals associated to image data, and configured to process input and output signals for controlling the entire apparatus. Moreover, controller 500 includes I/F 506 configured to receive data and signals used when modeling data is received from an external model data generating device 600. The model data generating device 600 is a device configured to create modeling data where a morphology of a final object is sliced into modeling layers, and includes an image processing device, such as a personal computer. The controller 500 includes I/O 507 for loading detection signals from various sensors. Moreover, the controller 500 includes a head drive controller 508 configured to drive and control the heads 52a and 52b of the liquid jet mechanism 50.

The controller 500 includes a motor driver 510 and a motor driver 512. The motor driver 510 drives a motor constituting the X-direction scanning mechanism 550 configured to move the carriage 51 of the liquid jet mechanism 50 in the X direction (main scanning direction). The motor driver 512 drives a motor constituting the Y-direction scanning mechanism 552 to move the modeling device 5 in the Y direction (sub-scanning direction). The controller 500 includes a motor driver 511 that drives a motor constituting the Z-direction lifting mechanism 551 to move (lift and lower) the carriage 51 of the liquid jet mechanism 50 in the Z direction. The lifting motions along the direction indicated with the arrow Z may be up-down movements of the entire modeling device 5. The controller 500 includes a motor driver 513 and a motor driver 514. The motor diver 513 drives a motor 27 to lift and lower the supply stage 23. The motor driver 514 drives a motor 28 to lift and lower the modeling stage 24. The controller 500 includes a motor driver 515 that drives a motor 553 of the reciprocating motion mechanism 25 to move the leveling roller 12, and a motor driver 516 that drives a motor 26 to rotationally drive the leveling roller 12.

Moreover, the controller 500 includes a supply system driver 517 and a maintenance driver 518. The supply system driver 517 drives the powder feeder 554 to supply the material for additive manufacturing 20 to the supply tank 21. The maintenance driver 518 drives a maintenance mechanism 61 of the liquid jet mechanism 50. Detection signals from the thermohygro sensor 560 that detects a temperature and a humidity as the environmental conditions of the apparatus, and detection signals from other sensors are input into the I/O 507 of the controller 500. To the controller 500, a control panel 522 on which information necessary for the apparatus is input and displayed is connected. The model data generating device 600 and the additive manufacturing apparatus (powder additive manufacturing device) 601 constitutes an additive manufacturing system serving as the additive manufacturing apparatus of the present disclosure.

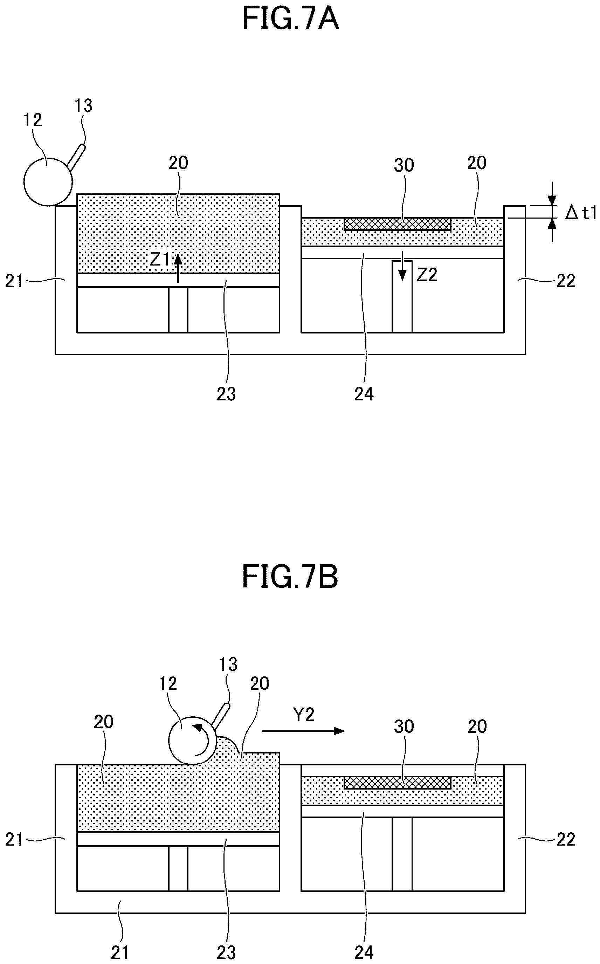

Next, a flow of a formation process of an object will be described with reference to Figs. 7A to 7E. Figs. 7A to 7E are schematic cross-sectional views illustrating the flow of the modeling process in the modeling section of the additive manufacturing apparatus according to one embodiment of the present disclosure.

The description of the process flow starts from the state where a first modeling layer 30 is formed on a modeling stage 24 of a modeling tank 22. When a fresh modeling layer 30 is formed on the existing modeling layer 30, as illustrated in Fig. 7A, a supply stage 23 of a supply tank 21 is lifted in the Z1 direction, and the modeling stage 24 of the modeling tank 22 is lowered in the Z2 direction. The lowering distance of the modeling stage 24 is adjusted so that a gap between the upper plane of the modeling tank 22 (the surface of the powder layer) and the bottom (lower tangent) of the leveling roller 12 is Δt1. The gap Δt1 is equivalent to a thickness of a powder layer 31 to be formed. The gap Δt1 is preferably 20 µm or greater and less than 200 µm.

As illustrated in Fig. 7B, a portion of the material for additive manufacturing 20 present above the upper plane level of the supply tank 21 is moved in the Y2 direction (to the side of the modeling tank 22) by rotating the leveling roller 12 in the forward direction (the direction indicated with the arrow in Fig. 7B) to transfer and supply the material for additive manufacturing 20 to the modeling tank 22.

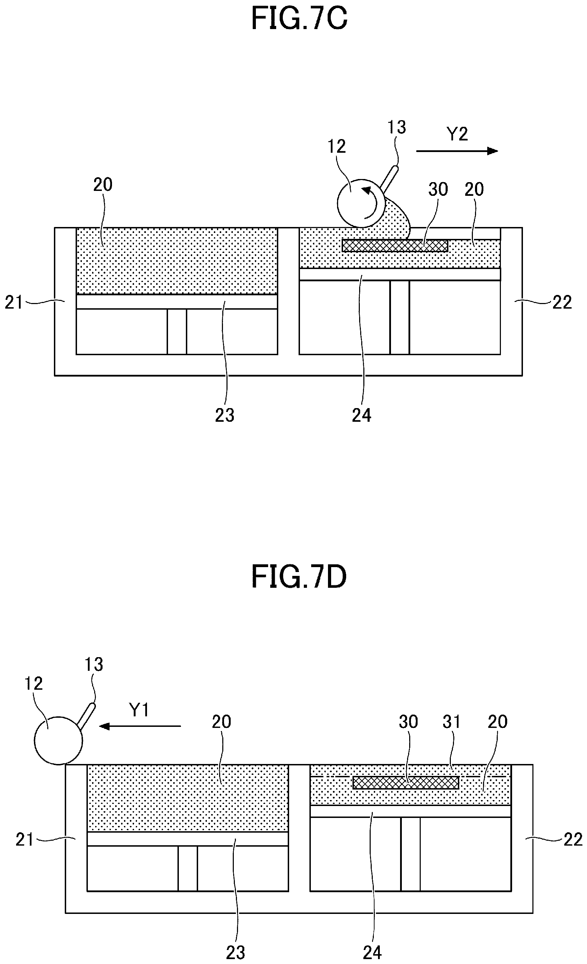

As illustrated in Fig. 7C, the leveling roller 12 is moved parallel to the plane of the modeling stage 24 of the modeling tank 22. As illustrated in Fig. 7D, a powder layer 31 having the predetermined thickness Δt1 is formed on the modeling layer 30 of the modeling stage 24 (formation of a powder layer). After the formation of the powder layer 31, the leveling roller 12 is moved in the Y1 direction to return back to the initial position, as illustrated in Fig. 7D. The leveling roller 12 is arranged to be movable, while the leveling roller 12 maintains a certain distance with the upper plane of the modeling tank 22 and with the upper plane of the supply tank 21. Since the leveling roller 12 can move while maintaining a certain distance with the upper plane of the modeling tank 22 and with the upper plane of the supply tank 21, the material for additive manufacturing 20 is transferred to the modeling tank 22 by the leveling roller 12, and a powder layer 31 having the uniform thickness Δt1 can be formed on the modeling tank 22 or the previously formed modeling layer 30.

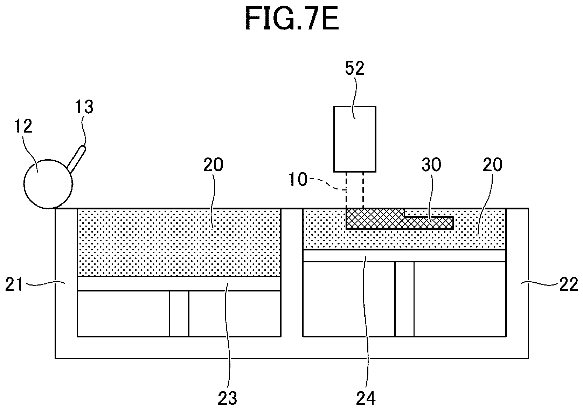

Thereafter, droplets of the modeling liquid 10 are discharged from a head 52 of a liquid jet mechanism 50 to form a modeling layer 30 in the freshly formed powder layer 31 (solidification of the powder layer), as illustrated in fig. 7E.

The modeling layer 30 is formed, for example, by mixing the modeling liquid 10 discharged from the head 52 with the material for additive manufacturing 20 to dissolve the adhesive inside the material for additive manufacturing 20, and binding the dissolved adhesive together to bind the material for additive manufacturing 20.

The process for forming a powder layer 31 through supply of a powder and leveling (formation of a powder layer), and the process for discharging the modeling liquid from the head 52 (solidification of the powder layer) are repeated to form a fresh modeling layer 30. The freshly formed modeling layer 30 is integrated with the modeling layer 30 below to constitute part of a 3D object.

### (Powder container)

The powder container for use in the present disclosure includes a container, and the material for additive manufacturing of the present disclosure accommodated in the container.

The container is not particularly limited, and the shape, structure, size, and material of the container are appropriately selected according to the intended purpose. Examples of the container include powder bags formed of aluminum laminate films or resin films, powder cartridges, and powder tanks.

### Examples

The present disclosure will be concretely described below by way of Examples and Comparative Examples. The present disclosure should not be construed as being limited to these Examples. In Examples and Comparative Examples, "part(s)" represents "part(s) by mass," and "%" represents "% by mass," unless otherwise stated.

### <<Method for measuring d50 of powder>>

In Examples 1 to 14 and Comparative Examples 1 to 2 below, the median diameter (d50) of the powder A and the median diameter (d50) of the powder B were measured by a particle size distribution analyzer (Microtrac MT3000II series, available from MicrotracBELL Corporation). The results are presented in Tables 1 to 4.

### <<Method for measuring percentage of particles having particle size of 106 µm or greater>>

In each of Examples 1 to 14 and Comparative Examples 1 to 2, a percentage of particles having a particle size of 106 µm or greater to a group of particles constituting the powder A and a percentage of particles having a particle size of 106 µm or greater to a group of particles constituting the powder B were measured by a sieving test.

The sieving test was performed by the method specified in ISO 2591-1: 1988 (Test sieving Part 1). A sieve having an aperture of 106 µm (test sieve, available from Kansai Wire Netting Co., Ltd.) was placed over a powder receiver. The sieve was loaded with a sample powder, and a lid was placed on the sieve. The sieve was mounted in a sieving device (low-tap sieve shaker, available from SIEVE FACTORY IIDA Co., Ltd.), and the device was driven at 60 Hz for 10 minutes to perform sieving. A mass ratio of the particles remaining on the sieve having the aperture of 106 µm relative to a total mass of the loaded powder was determined as the "percentage of particles having a particle size of 106 µm or greater." The results are presented in Tables 1 to 4.

### «Shifts of liquid phase ratios of powder A and powder B relative to temperature»

In Examples 1 to 14 and Comparative Examples 1 to 2 below, the simulation for a shift of a liquid phase ratio of the powder A and a shift of a liquid phase ratio of the powder B relative to a temperature was performed by thermodynamic calculation software (CaTCalc, available from Research Institute of Computational Thermodynamics, Inc.).

Specifically, compositions of metals in the material for additive manufacturing, a temperature range, and a pressure were input into the thermodynamic calculation software to calculate a liquid phase ratio. For the calculation in Example 1, as the compositions of the metals, "Al: 100% by mass" was input as the parameter for the powder A, "Al: 88% by mass" and "Si: 12% by mass" were input as the parameters of the powder B, "550°C to 700°C" was input as the temperature range, and "101,325 Pa" was input as the pressure. In each of Examples 2 to 13 and Comparative Examples 1 to 3, calculation was performed in the same manner as the above, except that the parameter for the powder A and the parameters for the powder B were changed to parameters based on compositions presented in Tables 1 to 4. The results are presented in Tables 1 to 4.

### «Evaluations of sintering precursor and sintered compact»

In each of Examples 1 to 14 and Comparative Examples 1 to 2, a "relative density of the sintering precursor," a "relative density of the sintered compact," and a "deformation amount of the sintered compact" were evaluated in the following manner. The results are presented in Table 5.

### -Measuring method for relative density of sintering precursor and relative density of sintered compact-

A relative density of the sintering precursor and a relative density of the sintered compact were measured according to the Archimedes method.

### -Evaluation of deformation amount of sintered compact-

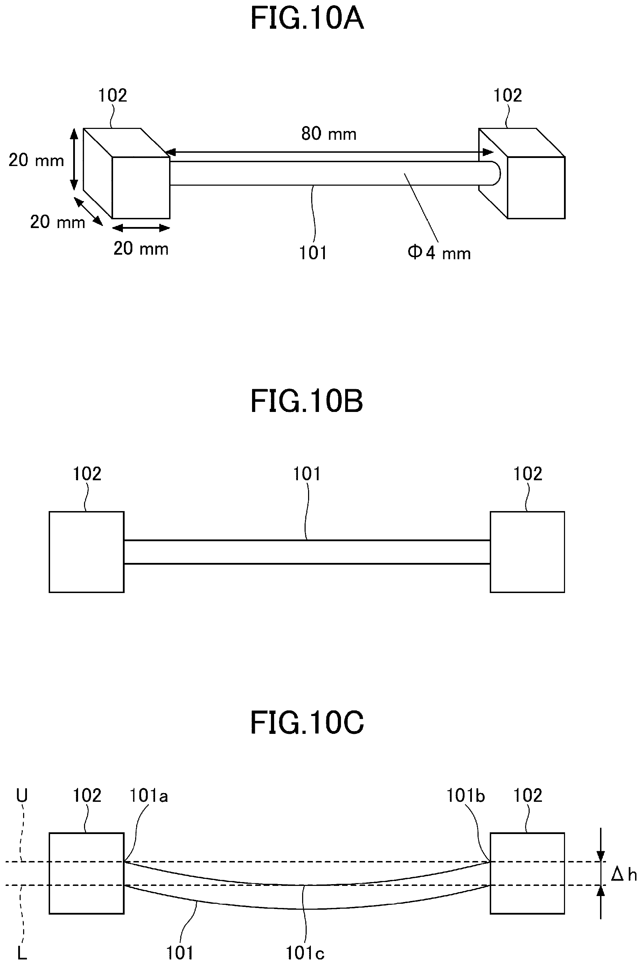

Fig. 10A is a schematic perspective view illustrating the shape of the sintering precursor formed in each of Examples 1 to 14 and Comparative Examples 1 to 2. Fig. 10B is a schematic front view illustrating the shape of the sintering precursor formed in each of Examples 1 to 14 and Comparative Examples 1 to 2. Fig. 10C is a schematic front view illustrating the shape of the sintered compact of each of Examples 1 to 14 and Comparative Examples 1 to 2. Figs. 10A to 10C are explanatory views for an evaluation method of a deformation amount of the sintered compact.

When the sintering precursor of each of Examples 1 to 14 and Comparative Examples 1 to 2 having the shape, in which blocks 102 were respectively provided at both edges of a thin and long pipe portion 101 as illustrated in Figs. 10A and 10B, was sintered, the pipe portion 101 was bent downwards due to own weight. As illustrated in Fig. 10C, the deflection amount Δh of the pipe portion 101 was determined as an index for a deformation amount (mm) of the sintered compact.

As the deflection amount Δh, a length between an imaginary line U and an imaginary line L drawn in the following manner was measured by a dial gauge (ID-C125XB, available from Mitutoyo Corporation), and an absolute value of the measured value was determined as the deflection amount Δh.
(1) When the object was observed directly in front, a line connecting between the upper edge 101a of the pipe portion 101 in contact with one block portion 102 and the upper edge 101b of the pipe portion 101 in contact with the other block portion 102 was determined as an imaginary line U, and a height of the imaginary line U was determined as "0 mm."
(2) A line that passed through a point 101c, which was the upper edge of the bent pipe portion 101 and formed the maximum distance from the imaginary line U, and was parallel to the imaginary line U was determined as an imaginary line L.

### (Example 1)

### <Production of material for additive manufacturing>

As a material for additive manufacturing, a mixed powder including the following powder A and the following powder B was used.
Powder A: pure Al (available from TOYO ALUMINIUM K.K., d50: 35 µm, percentage of particles having particle size of 106 µm or greater: less than 0.1% by mass)
Powder B: AlSi12 (available from TOYO ALUMINIUM K.K., d50: 35 µm, percentage of particles having particle size of 106 µm or greater: less than 0.1% by mass)

The "AlSi12" represents "Al-12% by mass Si alloy." Other alloys are presented in the similar manner hereinafter.

A bead mill (DYNO-MILL, available from SHINMARU ENTERPRISES CORPORATION) was charged with the powder A and the powder B in a manner that the volume of the powder B was 20% by volume relative to the total volume of the mixed powder of the powder A and the powder B, and the bead mill was driven at 100 rpm for 5 minutes to prepare [Additive Manufacturing Material 1].

### <Preparation of modeling liquid>

With 88% by mass (a whole amount, not a solid content of a resin) of a partially saponified polyvinyl acetate resin (JMR-10LL, available from JAPAN VAM & POVAL CO., LTD.) serving as a binder, 12% by mass of triethylene glycol dimethyl ether were mixed. The resulting mixture was stirred by a magnetic stirrer for 2 hours while heating at 80°C to dissolve the resin. After the stirring, the resulting solution was filtered through a 1 µm-filter to prepare a modeling liquid.

### <Production of sintering precursor>

[Additive Manufacturing Material 1] was leveled by recoating so that a thickness of a stacked layer (may be also referred to as a "layer-stacking pitch") was 84 µm (formation of a powder layer). Subsequently, the prepared modeling liquid was dropped onto a modeling region by a liquid jet head (solidification of the powder layer). The formation of a powder layer and the solidification of the powder layer were repeated to produce a [Sintering Precursor 1] having the shape a cubic block portion 102 having a side of 20 mm was provided at both edges of a thin and long pipe portion 101 having a length 80 mm and a diameter of 4 mm as illustrated in Figs. 10A and 10B.

### <Production of sintered compact>

Then, [Sintering Precursor 1] was placed in a vacuum drier (DP610P, available from Yamato Scientific Co., Ltd.) in the state where [Sintering Precursor 1] was still buried in the excess mixed powder (may be referred to as the "excess powder") that had not been solidified, and [Sintering Precursor 1] was heated at 100°C in the vacuum atmosphere (gauge pressure: -0.1 MPa). The dried sintering precursor was blasted with air to remove the deposited excess powder. The sintering precursor from which the excess powder had been removed was placed in a compact vacuum sintering furnace (available from DOWA THERMOTECH CO., LTD.), and the temperature of the furnace was maintained at a temperature equal to or higher than the thermal decomposition temperature of the binder and lower than the eutectic temperature (577°C) of AlSi12 to remove the resin from the sintering precursor. Then, the temperature was retained at 600°C, which was the temperature within the range of 577°C < T < 660°C to sinter the sintering precursor to thereby form [Sintered Compact 1].

### -Evaluation results-

Fig. 9A is a graph depicting the result of the change in the liquid phase ratio of the powder A (pure Al) and the liquid phase ratio of the powder B (AlSi12) relative to the temperature, which was calculated by the thermodynamic calculation software (CaTCalc). As a result of the calculation, the temperature T, at which the liquid phase ratio of the powder A (pure Al) was 30% by mass or lower, and the liquid phase ratio of the powder B (AlSi 12) was 70% by mass or greater was within the range of 577°C < T < 660°C. It was found that the majority of the particles of the powder A (pure Al) functioned as a skeleton of a solid phase, and the majority of the particles of the powder B (AlSi12) were turned into a liquid phase to fill the gaps between the skeleton by setting the sintering temperature within the above-mentioned range. Moreover, the liquid phase ratio of the pure Al at 600°C, which was the sintering temperature of [Sintered Compact 1], was 0% by mass, and the liquid phase ratio of the AlSi12 at 600°C, which was the sintering temperature of [Sintered Compact 1] was 100% by mass.

In Example 1, the relative density of the sintering precursor was 56%, and the relative density of the sintered compact was 92%. Since the sintered compact had a high density, the AlSi12 was turned into a liquid phase at the sintering temperature to fill the gaps between the particles of the pure Al to increase the density of the sintered compact.

The deformation amount of the sintered compact of Example 1 was 0.2 mm. While the AlSi12 was turned into a liquid phase at the sintering temperature, the pure Al stayed as a solid phase that functioned as a skeleton to minimize the deformation during the sintering.

### (Comparative Example 1)

[Additive Manufacturing Material 15] was prepared, and [Sintering Precursor 15] and [Sintered Compact 15] were formed using [Additive Manufacturing Material 15] in the same manner as in Example 1, except that, in <Production of material for additive manufacturing>, instead of the mixed powder of the powder A and the powder B, only the powder A (pure Al, available from TOYO ALUMINIUM K.K., d50: 35 µm, percentage of particles having particle size of 106 µm or greater: less than 0.1% by mass).

### -Evaluation results-

The relative density of [Sintered Compact 15] was not significantly changed from the relative density of [Sintering Precursor 15], and the sintering did not progress. It was therefore demonstrated that a density of a sintered compact did not increase when an alloy powder that would be turned into a liquid phase was not included in the material for additive manufacturing.

Since the sintering did not progress, the evaluation of the deformation amount of the sintered compact was not carried out.

### (Comparative Example 2)

[Additive Manufacturing Material 16] was prepared, and [Sintering Precursor 16] and [Sintered Compact 16] were formed using [Additive Manufacturing Material 16] in the same manner as in Example 1, except that, in <Production of material for additive manufacturing>, the mixed powder of the powder A and the powder B was changed as follows.
Powder A: AlSi4 (available from TOYO ALUMINIUM K.K., d50: 35 µm, percentage of particles having particle size of 106 µm or greater: less than 0.1% by mass)
Powder B: AlSi5 (available from TOYO ALUMINIUM K.K., d50: 35 µm, percentage of particles having particle size of 106 µm or greater: less than 0.1% by mass)

### -Evaluation results-

Fig. 9B is a graph depicting the result of the change in the liquid phase ratio of the powder A (AlSi4) and the liquid ratio of the powder B (AlSi5) relative to the temperature in Comparative Example 2, which was calculated by the thermodynamic calculation software (CaTCalc). As a result of the calculation, there was no temperature range in which the liquid phase ratio of the powder A (AlSi4) was 30% by mass or less, and the liquid phase ratio of the powder B (AlSi5) was 70% by mass or greater. Therefore, however the sintering temperature was set, there was no portion functioning as a skeleton, and a liquid phase was generated over an entire object. Moreover, the liquid phase ratio of AlSi4 at the sintering temperature (600°C) of [Sintered Compact 16] was 35% by mass, and the liquid phase ratio of AlSi5 at the sintering temperature (600°C) of [Sintered Compact 16] was 47% by mass.

The deformation amount (deflection amount Δh) of the sintered compact was 0.6 mm, which was large. Therefore, it was demonstrated that sintering deformation was significant when there was no portion functioning as a skeleton during the sintering.

### (Example 2)

[Additive Manufacturing Material 2] was prepared, and [Sintering Precursor 2] and [Sintered Compact 2] were formed using [Additive Manufacturing Material 2] in the same manner as in Example 1, except that, in <Production of material for additive manufacturing>, the mixed powder of the powder A and the powder B was changed as follows, and in <Production of sintered compact>, the sintering temperature was changed from 600°C to 580°C.
Powder A: AlSi3 (available from TOYO ALUMINIUM K.K., d50: 35 µm, percentage of particles having particle size of 106 µm or greater: less than 0.1% by mass)
Powder B: AlSi10 (available from TOYO ALUMINIUM K.K., d50: 35 µm, percentage of particles having particle size of 106 µm or greater: less than 0.1% by mass)

### -Evaluation results-

As a result of the calculation, the temperature T, at which the liquid phase ratio of the powder A (AlSi3) was 30% by mass or less, and the liquid phase ratio of the powder B (AlSi10) was 70% by mass or greater was within the range of 577°C < T < 610°C. Moreover, the liquid phase ratio of AlSi3 at the sintering temperature (580°C) of [Sintered Compact 2] was 14% by mass, and the liquid phase ratio of AlSi10 at the sintering temperature (580°C) of [Sintered Compact 2] was 80% by mass.

Moreover, as a result of the evaluations of the sintering precursor and the sintered compact, similarly to Example 1, both increase in the density and minimization of deformation could be observed.

### (Example 3)

[Additive Manufacturing Material 3] was prepared, and [Sintering Precursor 3] and [Sintered Compact 3] were formed using [Additive Manufacturing Material 3] in the same manner as in Example 1, except that, in <Production of material for additive manufacturing>, the mixed powder of the powder A and the powder B was changed as follows, and in <Production of sintered compact>, the sintering temperature was changed from 600°C to 590°C.
Powder A: AlSi4 (available from TOYO ALUMINIUM K.K., d50: 35 µm, percentage of particles having particle size of 106 µm or greater: less than 0.1% by mass)
Powder B: AlSi8 (available from TOYO ALUMINIUM K.K., d50: 35 µm, percentage of particles having particle size of 106 µm or greater: less than 0.1% by mass)

### -Evaluation results-

As a result of the calculation, the temperature T, at which the liquid phase ratio of the powder A (AlSi4) was 30% by mass or less, and the liquid phase ratio of the powder B (AlSi8) was 70% by mass or greater was within the range of 589°C < T < 593°C. Moreover, the liquid phase ratio of AlSi4 at the sintering temperature (590°C) of [Sintered Compact 3] was 29% by mass, and the liquid phase ratio of AlSi8 at the sintering temperature (590°C) of [Sintered Compact 3] was 71% by mass.

Moreover, as a result of the evaluations of the sintering precursor and the sintered compact, similarly to Example 1, both increase in the density and minimization of deformation could be observed.

### (Example 4)

[Additive Manufacturing Material 4] was prepared, and [Sintering Precursor 4] and [Sintered Compact 4] were formed using [Additive Manufacturing Material 4] in the same manner as in Example 1, except that, in <Production of material for additive manufacturing>, the mixed powder of the powder A and the powder B was changed as follows.
Powder A: pure Al (available from TOYO ALUMINIUM K.K., d50: 80 µm, percentage of particles having particle size of 106 µm or greater: 14.0% by mass)
Powder B: AlSi12 (available from TOYO ALUMINIUM K.K., d50: 80 µm, percentage of particles having particle size of 106 µm or greater: 14.0% by mass)

### -Evaluation results-

The proportion of the particles having the particle size larger than the layer-stacking pitch (84 µm) was large, and the large particles included at a certain ratio were recoated to the excess powder receiver. As a result, the amount of particles having a small particle size in each of the stacked layers (layer-stacking pitch) was reduced so that the relative density of the sintering precursor was low compared to Example 1. Since the relative density of the sintering precursor was low, the relative density of the sintered compact was also low compared to Example 1.

### (Example 5)

[Additive Manufacturing Material 5] was prepared, and [Sintering Precursor 5] and [Sintered Compact 5] were formed using [Additive Manufacturing Material 5] in the same manner as in Example 1, except that, in <Production of material for additive manufacturing>, the volume of the powder B relative to the total volume of the mixed powder of the powder A and the powder B was changed from 20% by volume to 5% by volume.

### -Evaluation results-

As the ratio of the powder B relative to the total volume of the mixed powder of the powder A and the powder B was reduced, the relative density of the sintered compact was low compared to Example 1. It was demonstrated that the increase in the ratio of the alloy, which would be turned into a liquid phase during sintering, lead to the increase in the density of the resulting sintered compact.

### (Example 6)

[Additive Manufacturing Material 6] was prepared, and [Sintering Precursor 6] and [Sintered Compact 6] were formed using [Additive Manufacturing Material 6] in the same manner as in Example 1, except that, in <Production of material for additive manufacturing>, the volume of the powder B relative to the total volume of the mixed powder of the powder A and the powder B was changed from 20% by volume to 25% by volume.

### -Evaluation results-

As the ratio of the powder B relative to the total volume of the mixed powder of the powder A and the powder B was increased, the relative density of the sintered compact was high compared to Example 1. It was demonstrated that the increase in the ratio of the alloy, which would be turned into a liquid phase during sintering, lead to the increase in the density of the resulting sintered compact.

### (Example 7)

[Additive Manufacturing Material 7] was prepared, and [Sintering Precursor 7] and [Sintered Compact 7] were formed using [Additive Manufacturing Material 7] in the same manner as in Example 1, except that, in <Production of material for additive manufacturing>, the volume of the powder B relative to the total volume of the mixed powder of the powder A and the powder B was changed from 20% by volume to 30% by volume.

### -Evaluation results-

As the ratio of the powder B relative to the total volume of the mixed powder of the powder A and the powder B was increased, the relative density of the sintered compact was high compared to Example 1. It was demonstrated that the increase in the ratio of the alloy, which would be turned into a liquid phase during sintering, lead to the increase in the density of the resulting sintered compact.

### (Example 8)

[Additive Manufacturing Material 8] was prepared, and [Sintering Precursor 8] and [Sintered Compact 8] were formed using [Additive Manufacturing Material 8] in the same manner as in Example 1, except that, in <Production of material for additive manufacturing>, the mixed powder of the powder A and the powder B was changed as follows.
Powder A: pure Al (available from TOYO ALUMINIUM K.K., d50: 50 µm, percentage of particles having particle size of 106 µm or greater: less than 0.1% by mass)
Powder B: AlSi12 (available from TOYO ALUMINIUM K.K., d50: 50 µm, percentage of particles having particle size of 106 µm or greater: less than 0.1% by mass)

### -Evaluation results-

As the median diameters of the powder A and the powder B were increased, the flowability of the material for additive manufacturing was improved so that packing of the powder layer was improved. As a result, the relative density of the sintering precursor was high compared to Example 1.

### (Example 9)

[Additive Manufacturing Material 9] was prepared, and [Sintering Precursor 9] and [Sintered Compact 9] were formed using [Additive Manufacturing Material 9] in the same manner as in Example 8, except that, in <Production of material for additive manufacturing>, the powder B was changed as follows.
Powder B: AlSi12 (available from TOYO ALUMINIUM K.K., d50: 25 µm, percentage of particles having particle size of 106 µm or greater: less than 0.1% by mass)

### -Evaluation results-

As the particles of AlSi12 having the small particle size were arranged between the particles of pure Al having the large particle size, the relative density of the sintering precursor was high compared to Example 8. As the particles of AlSi12 having the small particle size were included in the material for additive manufacturing, the number of the contact points between the particles was increased to facilitate the sintering, so that the relative density of the sintered compact was improved compared to Example 8. Since the relative density of the sintering precursor was improved, sintering shrinkage was reduced, and the deformation amount of the sintered compact was small compared to Example 8.

### (Example 10)

[Additive Manufacturing Material 10] was prepared, and [Sintering Precursor 10] and [Sintered Compact 10] were formed using [Additive Manufacturing Material 10] in the same manner as in Example 8, except that, in <Production of material for additive manufacturing>, the powder A was changed as follows.
Powder A: pure Al (available from TOYO ALUMINIUM K.K., d50: 25 µm, percentage of particles having particle size of 106 µm or greater: less than 0.1% by mass)

### -Evaluation results-

The particles of AlSi12 having the large particle size each had an oxide film that was thin relative to the volume of each particle, thus the oxide film was easily broken when the particles were turned into a liquid phase. Therefore, use of the particles of AlSi12 having the large particle size was advantageous for increasing the density. Therefore, the sintering density was improved compared to Example 8.

### (Example 11)

[Additive Manufacturing Material 11] was prepared, and [Sintering Precursor 11] and [Sintered Compact 11] were formed using [Additive Manufacturing Material 11] in the same manner as in Example 1, except that, in <Production of material for additive manufacturing>, the powder B was changed as follows, and the temperature for removal of the resin was changed from the temperature that was equal to or higher than thermal decomposition temperature of the binder and lower than the eutectic temperature (577°C) of AlSi12 to a temperature that was equal to or higher than the thermal decomposition temperature of the binder and lower than the eutectic temperature (548°C) of AlCu33.
Powder B: AlCu33 (available from TOYO ALUMINIUM K.K., d50: 35 µm, percentage of particles having particle size of 106 µm or greater: less than 0.1% by mass)

### -Evaluation results-

The temperature range in which the liquid phase ratio of the powder A (pure Al) was 30% by mass or less, and the liquid phase ratio of the powder B (AlCu33) was 70% by mass or greater was 548°C < T < 660°C. Therefore, the increase in the density was observed similarly to Example 1.

### (Example 12)

[Additive Manufacturing Material 12] was prepared, and [Sintering Precursor 12] and [Sintered Compact 12] were formed using [Additive Manufacturing Material 12] in the same manner as in Example 1, except that, in <Production of material for additive manufacturing>, the powder B was changed as follows, and the temperature for removal of the resin was changed from the temperature that was equal to or higher than thermal decomposition temperature of the binder and lower than the eutectic temperature (577°C) of AlSi12 to a temperature that was equal to or higher than the thermal decomposition temperature of the binder and lower than the solidus temperature (567°C) of AlSi10Mg0.4.
Powder B: AlSi10Mg0.4 (available from TOYO ALUMINIUM K.K., d50: 35 µm, percentage of particles having particle size of 106 µm or greater: less than 0.1% by mass)

### -Evaluation results-

The temperature range in which the liquid phase ratio of the powder A (pure Al) was 30% by mass or less, and the liquid phase ratio of the powder B (AlSi10Mg0.4) was 70% by mass or greater was 578°C < T < 660°C. Therefore, Mg exhibited an effect of reducing the oxide film, and the sintered compact having the high density compared to Example 1 was obtained.

### (Example 13)

[Additive Manufacturing Material 13] was prepared, and [Sintering Precursor 13] and [Sintered Compact 13] were formed using [Additive Manufacturing Material 13] in the same manner as in Example 1, except that, in <Production of material for additive manufacturing>, the powder A was changed as follows.
Powder A: AlFe1 (available from TOYO ALUMINIUM K.K., d50: 35 µm, percentage of particles having particle size of 106 µm or greater: less than 0.1% by mass)

### -Evaluation results-

The temperature T, at which the liquid phase ratio of the powder A (AlFe1) was 30% by mass or less, and the liquid phase ratio of the powder B (AlSi12) was 70% by mass or greater, was within the range of 577°C < T < 653°C. Therefore, the increase in the density was observed similarly to Example 1.

### (Example 14)

[Additive Manufacturing Material 14] was prepared, and [Sintering Precursor 14] and [Sintered Compact 14] were formed using [Additive Manufacturing Material 14] in the same manner as in Example 1, except that, <Production of material for additive manufacturing> was changed as follows.

### <Production of material for additive manufacturing>

As a material for additive manufacturing, a mixed powder including the following powder A, the following powder B, and the following powder C was used. Powder A: pure Al (available from TOYO ALUMINIUM K.K., d50: 35 µm, percentage of particles having particle size of 106 µm or greater: less than 0.1% by mass) Powder B: AlSi12 (available from TOYO ALUMINIUM K.K., d50: 35 µm, percentage of particles having particle size of 106 µm or greater: less than 0.1% by mass) Powder C: AlSi1Mg0.4 (available from TOYO ALUMINIUM K.K., d50: 35 µm, percentage of particles having particle size of 106 µm or greater: less than 0.1% by mass)

A bead mill (DYNO-MILL, available from SHINMARU ENTERPRISES CORPORATION) was charged with the powder A, the powder B, and the powder C in a manner that a ratio between the powder A, the powder B, and the powder C relative to a total volume of the mixed powder of the powder A, the powder B, and the powder C (powder A : powder B : powder C) was 40 : 20 : 40 (% by volume), and the bead mill was driven at 100 rpm for 5 minutes to prepare [Additive Manufacturing Material 14].

### -Evaluation results-

The temperature T, at which the liquid phase ratio of the powder A (pure Al) was 30% by mass or less, and the liquid phase ratio of the powder B (AlSi12) was 70% by mass or greater, was within the range of 577°C < T < 660°C. Therefore, the increase in the density was observed similarly to Example 1.

**Table 1**

| | | Ex. 1 | Ex. 2 | Ex. 3 | Ex. 4 |
|---|---|---|---|---|---|
| Powder A | Composition | Pure Al | AlSi3 | AlSi4 | Pure Al |
| | d50 [µm] | 35 | 35 | 35 | 80 |
| | Percentage of particles of 106 µm or greater [%] | <0.1 | <0.1 | <0.1 | 14.0 |
| | Liquid phase ratio at sintering temperature [mass%] | 0 | 14 | 29 | 0 |
| | Amount [vol%] | 80 | 80 | 80 | 80 |
| PowderB | Composition | AlSi12 | AlSi 10 | AlSi8 | AlSi12 |
| | d50 [µm] | 35 | 35 | 35 | 80 |
| | Percentage of particles of 106 µm orgreater [%] | <0.1 | <0.1 | <0.1 | 14.0 |
| | Liquid phase ratio at sintering temperature [mass%] | 100 | 80 | 71 | 100 |
| | Amount [vol%] | 20 | 20 | 20 | 20 |
| Powder C | Composition | - | - | - | - |
| | Percentage of particles of 106 µm or greater [%] | - | - | - | - |
| | Liquid phase ratio at sintering temperature [mass%] | - | - | - | - |
| | Amount [vol%] | - | - | - | - |
| Temperature range in which liquid phase ratio of powder A is 30% by mass or less and liquid phase ratio of powder B is 70% by mass or greater | | 577°C<T< 660°C | 577°C<T< 610°C | 589°C < T < 593°C | 577°C < T < 660°C |
| Modeling condition | Average thickness per layer [µm] | 84 | 84 | 84 | 84 |
| Sintering condition | Sintering temperature [°C] | 600 | 580 | 590 | 600 |

**Table 2**

| | | Ex. 5 | Ex. 6 | Ex. 7 | Ex. 8 |
|---|---|---|---|---|---|
| Powder A | Composition | Pure Al | Pure Al | Pure Al | Pure Al |
| | d50 [µm] | 35 | 35 | 35 | 50 |
| | Percentage of particles of 106 µm or greater [%] | <0.1 | <0.1 | <0.1 | <0.1 |
| | Liquid phase ratio at sintering temperature [mass%] | 0 | 0 | 0 | 0 |
| | Amount [vol%] | 95 | 75 | 70 | 80 |
| PowderB | Composition | AlSi12 | AlSi12 | AlSi12 | AlSi12 |
| | d50 [µm] | 35 | 35 | 35 | 50 |
| | Percentage of particles of 106 µm or greater [%] | <0.1 | <0.1 | <0.1 | <0.1 |
| | Liquid phase ratio at sintering temperature [mass%] | 100 | 100 | 100 | 100 |
| | Amount [vol%] | 5 | 25 | 30 | 20 |
| Powder C | Composition | - | - | - | - |
| | Percentage of particles of 106 µm or greater [%] | - | - | - | - |
| | Liquid phase ratio at sintering temperature [mass%] | - | - | - | - |
| | Amount [vol%] | - | - | - | - |
| Temperature range in which liquid phase ratio of powder A is 3 0% by mass or less and liquid phase ratio of powder B is 70% by mass or greater | | 577°C <T< 660°C | 577°C <T< 660°C | 577°C<T< 660°C | 577°C<T< 660°C |
| Modeling condition | Average thickness per layer [µm] | 84 | 84 | 84 | 84 |
| Sintering condition | Sintering temperature [°C] | 600 | 600 | 600 | 600 |

**Table 3**

| | | Ex. 9 | Ex. 10 | Ex. 11 | Ex. 12 |
|---|---|---|---|---|---|
| Powder A | Composition | Pure Al | Pure Al | Pure Al | Pure Al |
| | d50 [µm] | 50 | 25 | 35 | 35 |
| | Percentage of particles of 106 µm or greater [%] | <0.1 | <0.1 | <0.1 | <0.1 |
| | Liquid phase ratio at sintering temperature [mass%] | 0 | 0 | 0 | 0 |
| | Amount [vol%] | 80 | 80 | 80 | 80 |
| PowderB | Composition | AlSi12 | AlSi12 | AlCu33 | AlSi10Mg0.4 |
| | d50 [µm] | 25 | 50 | 35 | 35 |
| | Percentage of particles of 106 µm or greater [%] | <0.1 | <0.1 | <0.1 | <0.1 |
| | Liquid phase ratio at sintering temperature [mass%] | 100 | 100 | 100 | 100 |
| | Amount [vol%] | 20 | 20 | 20 | 20 |
| Powder C | Composition | - | - | - | - |
| | Percentage of particles of 106 µm or greater [%] | - | - | - | - |
| | Liquid phase ratio at sintering temperature [mass%] | - | - | - | - |
| | Amount [vol%] | - | - | - | - |
| Temperature range in which liquid phase ratio of powder A is 30% by mass or less and liquid phase ratio of powder B is 70% by mass or greater | | 577°C<T< 660°C | 577°C<T< 660°C | 548°C < T < 660°C | 578°C < T < 660°C |
| Modeling condition | Average thickness per layer [µm] | 84 | 84 | 84 | 84 |
| Sintering condition | Sintering temperature [°C] | 600 | 600 | 600 | 600 |

**Table 4**

| | | Ex. 13 | Ex. 14 | Comp. Ex. 1 | Comp. Ex. 2 |
|---|---|---|---|---|---|
| Powder A | Composition | AlFe1 | Pure Al | Pure Al | AlSi4 |
| | d50 [µm] | 35 | 35 | 35 | 35 |
| | Percentage of particles of 106 µm or greater [%] | <0.1 | <0.1 | <0.1 | <0.1 |
| | Liquid phase ratio at sintering temperature [mass%] | 0 | 0 | 0 | 35 |
| | Amount [vol%] | 80 | 40 | 100 | 80 |
| PowderB | Composition | AlSi12 | AlSi12 | - | AlSi5 |
| | d50 [µm] | 35 | 35 | - | 35 |
| | Percentage of particles of 106 µm or greater [%] | <0.1 | <0.1 | - | <0.1 |
| | Liquid phase ratio at sintering temperature [mass%] | 100 | 100 | - | 47 |
| | Amount [vol%] | 20 | 20 | - | 20 |
| Powder C | Composition | - | AlSi1Mg0.4 | - | - |
| | Percentage of particles of 106 µm or greater [%] | - | 35 | - | - |
| | Liquid phase ratio at sintering temperature [mass%] | - | <0.1 | - | - |
| | Amount [vol%] | - | 40 | - | - |
| Temperature range in which liquid phase ratio of powder A is 3 0% by mass or less and liquid phase ratio of powder B is 70% by mass or greater | | 577°C <T< 653°C | 577°C<T< 660°C | - | None |
| Modeling condition | Average thickness per layer [µm] | 84 | 84 | 84 | 84 |
| Sintering condition | Sintering temperature [°C] | 600 | 600 | 600 | 600 |

**Table 5**

| | Relative density of sintering precursor [%] | Relative density of sintered compact [%] | Deformation amount of sintered compact [mm] |
|---|---|---|---|
| Ex. 1 | 56 | 92 | 0.2 |
| Ex. 2 | 56 | 95 | 0.3 |
| Ex. 3 | 56 | 96 | 0.5 |
| Ex. 4 | 53 | 89 | 0.2 |
| Ex. 5 | 56 | 70 | 0.1 |
| Ex. 6 | 56 | 95 | 0.3 |
| Ex. 7 | 56 | 96 | 0.5 |
| Ex. 8 | 58 | 90 | 0.3 |
| Ex. 9 | 61 | 93 | 0.1 |
| Ex. 10 | 61 | 95 | 0.3 |
| Ex. 11 | 56 | 92 | 0.2 |
| Ex. 12 | 56 | 95 | 0.3 |
| Ex. 13 | 56 | 92 | 0.2 |
| Ex. 14 | 56 | 93 | 0.3 |
| Comp. Ex. 1 | 56 | 56 | - |
| Comp. Ex. 2 | 56 | 96 | 0.6 |

For example, embodiments of the present disclosure are as follows.
<1> A material for additive manufacturing, including:
   a powder A including an alloy or a pure metal; and
   a powder B including an alloy having a composition different from a composition of the powder A,
   wherein the material for additive manufacturing has a temperature range in which a liquid phase ratio of the powder A is 30% by mass or less relative to a total mass of the powder A, and a liquid phase ratio of the powder B is 70% by mass or greater relative to a total mass of the powder B.
<2> The material for additive manufacturing according to <1>,
   wherein the powder A is a group of particles, among which a percentage of particles having a particle size of 106 µm or greater is less than 10% by mass, and the powder B is a group of particles, among which a percentage of particles having a particle size of 106 µm or greater is less than 10% by mass.
<3> The material for additive manufacturing according to <2>,
   wherein a volume of the powder B is 10% by volume or greater relative to a total volume of the material for additive manufacturing.
<4> The material for additive manufacturing according to <3>,
   wherein the volume of the powder B is 15% by volume or greater and 25% by volume or less relative to the total volume of the material for additive manufacturing.
<5> The material for additive manufacturing according to any one of <1> to <4>,
   wherein a median diameter of the powder A is greater than a median diameter of the powder B.
<6> The material for additive manufacturing according to <5>,
   wherein a ratio [median diameter of powder A : median diameter of powder B] of the median diameter of the powder A to the median diameter of the powder B is from 1 : 0.3 to 1 : 0.7.
<7> The material for additive manufacturing according to <6>,
   wherein the median diameter of the powder A is 45 µm or greater and 55 µm or less, and the median diameter of the powder B is 20 µm or greater and 30 µm or less.
<8> The material for additive manufacturing according to any one of <1> to <4>,
   wherein a median diameter of the powder B is greater than a median diameter of the powder A.
<9> The material for additive manufacturing according to any one of <1> to <8>,
   wherein the powder A or the powder B, or both the powder A and the powder B include an aluminum alloy.
<10> The material for additive manufacturing according to <9>,
   wherein the aluminum alloy includes at least one element selected from the group consisting of silicon, magnesium, iron, and copper.
<11> The material for additive manufacturing according to <10>,
   wherein the powder B includes the aluminum alloy including the silicon, and
   an amount of the silicon is 8% by mass or greater and 14% by mass or less relative to a total mass of the aluminum alloy.
<12> An additive manufacturing method, including:
   forming a powder layer using the material for additive manufacturing of any one of <1> to <11>;
   applying a resin liquid including a resin to solidify the powder layer;
   repeating the forming and the applying to produce a sintering precursor;
   removing the resin from the sintering precursor; and
   sintering the sintering precursor, from which the resin is removed, in the temperature range in which the liquid phase ratio of the powder A is 30% by mass or less relative to the total mass of the powder A, and the liquid phase ratio of the powder B is 70% by mass or greater relative to the total mass of the powder B.
<13> An additive manufacturing apparatus, including:
   a powder layer forming device that uses the material for additive manufacturing of any one of <1> to <11> to form a powder layer;
   a powder layer solidifying device that applies a resin liquid including a resin to the powder layer to solidify the powder layer;
   a sintering precursor forming device that repeats an operation of the powder layer forming device and an operation of the powder layer solidifying device to produce a sintering precursor;
   a resin remover that removes the resin from the sintering precursor; and
   a sintering machine that sinters the sintering precursor, from which the resin is removed, in the temperature range in which the liquid phase ratio of the powder A is 30% by mass or less relative to the total mass of the powder A, and the liquid phase ratio of the powder B is 70% by mass or greater relative to the total mass of the powder B.

The material for additive manufacturing according to any one of <1> to <11>, the additive manufacturing method according to <12>, and the additive manufacturing apparatus according to <13> can solve the above-described various problems existing in the related art, and can achieve the object of the present disclosure.

## Claims

1. A material for additive manufacturing, comprising:
a powder A including an alloy or a pure metal; and
a powder B including an alloy having a composition different from a composition of the powder A,
wherein the material for additive manufacturing has a temperature range in which a liquid phase ratio of the powder A is 30% by mass or less relative to a total mass of the powder A, and a liquid phase ratio of the powder B is 70% by mass or greater relative to a total mass of the powder B.

2. The material for additive manufacturing according to claim 1,
wherein the powder A is a group of particles, among which a percentage of particles having a particle size of 106 µm or greater is less than 10% by mass, and the powder B is a group of particles, among which a percentage of particles having a particle size of 106 µm or greater is less than 10% by mass.

3. The material for additive manufacturing according to claim 2,
wherein a volume of the powder B is 10% by volume or greater relative to a total volume of the material for additive manufacturing.

4. The material for additive manufacturing according to claim 3,
wherein the volume of the powder B is 15% by volume or greater and 25% by volume or less relative to the total volume of the material for additive manufacturing.

5. The material for additive manufacturing according to any one of claims 1 to 4,
wherein a median diameter of the powder A is greater than a median diameter of the powder B.

6. The material for additive manufacturing according to claim 5,
wherein a ratio [median diameter of powder A : median diameter of powder B] of the median diameter of the powder A to the median diameter of the powder B is from 1 : 0.3 to 1 : 0.7.

7. The material for additive manufacturing according to claim 6,
wherein the median diameter of the powder A is 45 µm or greater and 55 µm or less, and the median diameter of the powder B is 20 µm or greater and 30 µm or less.

8. The material for additive manufacturing according to any one of claims 1 to 4,
wherein a median diameter of the powder B is greater than a median diameter of the powder A.

9. The material for additive manufacturing according to any one of claims 1 to 8,
wherein the powder A or the powder B, or both the powder A and the powder B include an aluminum alloy.

10. The material for additive manufacturing according to claim 9,
wherein the aluminum alloy includes at least one selected from the group consisting of silicon, magnesium, iron, and copper.

11. The material for additive manufacturing according to claim 10,
wherein the powder B includes the aluminum alloy including the silicon, and
an amount of the silicon is 8% by mass or greater and 14% by mass or less relative to a total mass of the aluminum alloy.

12. An additive manufacturing method, comprising:
forming a powder layer using the material for additive manufacturing of any one of claims 1 to 11;
applying a resin liquid including a resin to solidify the powder layer;
repeating the forming and the applying to produce a sintering precursor;
removing the resin from the sintering precursor; and
sintering the sintering precursor, from which the resin is removed, in the temperature range in which the liquid phase ratio of the powder A is 30% by mass or less relative to the total mass of the powder A, and the liquid phase ratio of the powder B is 70% by mass or greater relative to the total mass of the powder B.

13. An additive manufacturing apparatus, comprising:
a powder layer forming device that uses the material for additive manufacturing of any one of claims 1 to 11 to form a powder layer;
a powder layer solidifying device that applies a resin liquid including a resin to the powder layer to solidify the powder layer;
a sintering precursor forming device that repeats an operation of the powder layer forming device and an operation of the powder layer solidifying device to produce a sintering precursor;
a resin remover that removes the resin from the sintering precursor; and
a sintering machine that sinters the sintering precursor, from which the resin is removed, in the temperature range in which the liquid phase ratio of the powder A is 30% by mass or less relative to the total mass of the powder A, and the liquid phase ratio of the powder B is 70% by mass or greater relative to the total mass of the powder B.
